# EUROPÄISCHE PATENTSCHRIFT

(11) **EP 2 122 572 B1**
(45) Veröffentlichungstag und Bekanntmachung des Hinweises auf die Patenterteilung: **19.09.2018**
(21) Anmeldenummer: 08708297.0
(22) Anmeldetag: 28.01.2008
(51) Int. Cl.: G06T 7/254, B25J 19/06

(54) **VERFAHREN UND VORRICHTUNG ZUM SICHERN EINES ARBEITSRAUMS**
METHOD AND DEVICE FOR SECURING A WORK SPACE
PROCÉDÉ ET DISPOSITIF POUR SÉCURISER UN LOCAL DE TRAVAIL

(30) Priorität: 15.02.2007 DE 102007007576
(43) Veröffentlichungstag der Anmeldung: 25.11.2009
(73) Patentinhaber: KUKA Deutschland GmbH, 86165 Augsburg (DE)
(72) Erfinder: BISCHOFF, Rainer, 86163 Augsburg (DE)
(74) Vertreter: Ege Lee & Partner Patentanwälte PartGmbB
(86) Internationale Anmeldenummer: PCT/EP2008/050979
(87) Internationale Veröffentlichungsnummer: WO 2008/098831

(56) Entgegenhaltungen:
- EP-A- 1 061 487
- US-A1- 2005 207 618
- US-B1- 6 829 371
- HARRIGAN R W: "Automated robotic radiation surveys" CONFERENCE PROCEEDINGS ARTICLE, 24. August 1989 (1989-08-24), Seiten 363-366, XP010088132
- HUANG LEE ET AL: "Robot-Assisted Localization Techniques for Wireless Image Sensor Networks" SENSOR AND AD HOC COMMUNICATIONS AND NETWORKS, 2006. SECON '06. 2006 3RD ANNUAL IEEE COMMUNICATIONS SOCIETY ON, IEEE, PI, 2006, Seiten 383-392, XP031012155 ISBN: 1-4244-0626-9

## Beschreibung

Die Erfindung betrifft ein Verfahren und eine Vorrichtung zum Sichern eines Arbeitsraums.

Damit eine Maschine, z.B. ein Industrieroboter, im Betrieb Personen nicht verletzt, kann der Arbeitsraum der Maschine mit einem Schutzzaun umgeben werden und so den Arbeitsraum der Maschine vom gewöhnliche Aufenthalts- bzw. Arbeitsraum des Menschen trennen. Der Schutzzaun kann einen Zugang, beispielweise in Form einer Tür, aufweisen. Wird die Tür geöffnet, dann kann die Maschine automatisch gestoppt werden.

Die DE 20 2004 020 863 U1 offenbart eine Vorrichtung zur Sicherung eines durch eine Maschine gefährdeten Arbeitsbereichs, der in einen gefährdeten und in einen weniger gefährdeten Unterbereich unterteilt ist. Die Vorrichtung umfasst einen Schutzzaun, einen Lichtvorhang und einen Laserscanner, der den gesamten Arbeitsraum in einer horizontalen Ebene abtastet, um die Position eines erfassten Objekts zu bestimmten.

Die US 2005/0207618 A1 offenbart, zum Abschirmen des Gefahrenbereichs einer automatisiert arbeitenden Maschine zwei zueinander versetzt angeordnete Bildaufnahmeeinheiten zu verwenden, die Bilder des Gefahrenbereichs aufnehmen. Die Bilder werden dreidimensionalen Szenenanalysen unter Anwendung unterschiedlicher dreidimensionaler Szenenanalyseverfahren unterzogen. Detektiert eines der Szenenanalyseverfahren ein Fremdobjekt, dann wird der Gefahrenbereich abgesichert.

Die US 6,829,371 B1 offenbart ein Verfahren zur Bestimmung von Setup-Parametern für ein Videoüberwachungssystem.

Dadurch können Eindringlinge in einen gesicherten Bereich erkannt werden.

Die EP 1 061 487 A1 offenbart, einen Überwachungsbereich, beispielsweise eines Museums oder einer Maschine, mit einer Videokamera zu überwachen.

In R.W. Harrigan, "Automated Robotic Radiation Survey", Konferenzpublikation der IEEE International Conference on Systems Engineering, Seiten 363-366, August 1989 werden Charakteristika von Gefahrenbereichen und deren Auswirkungen auf Steuerungen von Robotern besprochen.

In Huang Lee, et. al., "Robot-Assisted Localization Techniques for Wireless Image Sensor Networks", Veröffentlichung der 3. jährlichen IEEE SECON Konferenz 2006, Seiten 383-392, wird offenbart, mobile Roboter mittels eines Netzwerkes aus kabelloses Sensoren zu steuern.

Aufgabe der Erfindung ist es, ein alternatives Verfahren zum Sichern eines Arbeitsraums einer im Betrieb befindlichen Maschine anzugeben.

Eine weitere Aufgabe der Erfindung ist es, eine alternative Vorrichtung zum Sichern eines Arbeitsraums einer im Betrieb befindlichen Maschine anzugeben.

Die erste Aufgabe der Erfindung wird gelöst durch ein Verfahren gemäß dem Patentanspruch 1.

Das erfindungsgemäße Verfahren ist dazu bestimmt, den Arbeitsraum der im Betrieb befindlichen Maschine, die insbesondere ein Industrieroboter ist, zu sichern. Der Arbeitsraum ist beispielsweise eine Roboterzelle.

Das erfindungsgemäße Verfahren ist dazu bestimmt, den Arbeitsraum der im Betrieb befindlichen Maschine, die insbesondere ein Industrieroboter ist, zu sichern. Der Arbeitsraum ist beispielsweise eine Roboterzelle.

Eine Sicherung des Arbeitsraums ist beispielsweise dann nötig, wenn sich eine Person unbeabsichtigt der im Betrieb befindlichen Maschine nähern und eventuell von dieser verletzt werden kann. Aufgrund des erfindungsgemäßen Verfahrens wird das dreidimensionale Bild vom Arbeitsraum erzeugt. Das dreidimensionale Bild gibt demnach den Ist-Zustand des Arbeitsraums der Maschine wieder.

Anschließend wird das dreidimensionale Bild bzw. die dem dreidimensionalen Bild zugeordneten Bildpunkte dahingehend analysiert, ob der Ist-Zustand des Arbeitsraums dessen Soll-Zustand entspricht. Die dem dreidimensionalen Bild zugeordneten Bildpunkte ergeben insbesondere wenn aufgrund redundanter Sensorinformation mehrere Bildpunkte den gleichen Raumpunkt abbilden eine konsistente Punktwolke und stehen insbesondere mit einem realen Objekt des Arbeitsraums in Beziehung. Ein Bildpunkt ist beispielsweise einer Oberfläche oder einer Kante eines Objekts des Arbeitsraums zugeordnet und wird durch seine Koordinaten im Raum beschrieben.

Der Soll-Zustand des Arbeitsraums wird beispielsweise bei einem Industrieroboter durch seinen programmierten Bewegungsablauf festgelegt. Der Soll-Zustand kann z.B. als dreidimensionales Modell des Arbeitsraums beschrieben werden. Dieses Modell umfasst neben einer modellierten Einsatzumgebung, beispielsweise Werkstücke, Werkzeuge und Spannvorrichtungen, insbesondere ein Modell der Maschine bzw. des Industrieroboters. Insbesondere kann das Umgebungsmodell ein dynamisches Modell mit der Fähigkeit sein, die Bewegungsabläufe von Objekten (z.B. Werkstücken und Robotern) und Subjekten (z.B. Menschen) nachzubilden.

Mit dem Modell werden z.B. Geometrieprimitive, beispielsweise Linien, Flächen, Quader oder Ellipsoide, oder Dreiecksflächen derart in die Punktewolke platziert, sodass ein Abstandsfeh-, ler eines Bildpunktes des dreidimensionalen Bildes zur entsprechenden Geometrieprimitive bzw. Dreiecksfläche des Modells vom Soll-Zustand minimal ist. Die Geometrieprimitive bzw. Dreiecksflächen lassen sich dann einzeln oder in Kombination den mit dem dreidimensionalen Bild abgebildeten Objekten des Arbeitsraums zuordnen.

Ergibt die Analyse des dreidimensionalen Bildes bzw. der Bildpunkte, dass der Ist-Zustand des Arbeitsraums vom Soll-Zustand des Arbeitsraums abweicht, wird das erste Signal erzeugt. Das erste Signal kann z.B. ein Warnsignal sein oder kann dafür verwendet werden, die Maschine automatisch auf eine sicher reduzierte Geschwindigkeit zu setzen oder ganz abzuschalten.

Ein Abweichen des Ist-Zustandes vom Soll-Zustand des Arbeitsraums kann z.B. dann erkannt werden, wenn sich die Geometrieprimitive bzw. Dreiecksflächen des Modells vom Soll-Zustand nicht mehr mit im dreidimensionalen Bild abgebildeten Objekten des Arbeitsraums zuordnen lassen oder wenn ein Abstandsfehler eines Bildpunktes oder mehrerer Bildpunkte des dreidimensionalen Bildes zur entsprechenden Geometrieprimitive bzw. Dreiecksfläche des Modells vom Soll-Zustand einen vorbestimmten Minimalwert überschreitet.

Aufgrund der Analyse des dem Ist-Zustand des Arbeitsraums zugeordneten dreidimensionalen Bildes kann z.B. relativ zuverlässig erkannt werden, ob sich eine Person unbeabsichtigt im Arbeitsraum der Maschine befindet oder ob die Maschine vom geplanten Bewegungsablauf abweicht.

Um den Arbeitsraum der Maschine möglichst zuverlässig zu sichern, ist es nach einer Ausführungsform des erfindungsgemäßen Verfahrens vorgesehen, eine Serie dreidimensionaler Bilder vom Arbeitsraum zu erzeugen, die einzelnen dreidimensionalen Bilder dahingehend zu analysieren, ob die jeweiligen Ist-Zustände des Arbeitsraums von den entsprechenden Soll-Zuständen des Arbeitsraums abweichen, und das erste Signal aufgrund der einzelnen analysierten dreidimensionalen Bilder zu erzeugen, wenn einer der Ist-Zustände des Arbeitsraums vom entsprechenden Soll-Zustand des Arbeitsraums abweicht. Gemäß dieser Variante können während einer Bewegung der Maschine ständig dreidimensionale Bilder des Arbeitsraums der Maschinen erzeugt werden, deren zugeordnete Bildpunkte dann jeweils mit einem den entsprechenden Soll-Zustand des Arbeitsraums modellierenden Modells verglichen werden.

Um eine Gefahr eines unbeabsichtigten Erzeugens des ersten Signals zumindest zu verringern, kann das erste Signal nur dann erzeugt werden, wenn sich aufgrund einer vorgegebenen Anzahl von hintereinanderfolgenden analysierten dreidimensionalen Bildern ergibt, dass die jeweiligen Ist-Zustände des Arbeitsraums abweichen.

Die Grenzen des Arbeitsraums können sich mit einer Bewegung der Maschine ändern. Das erfindungsgemäße Verfahren ist insbesondere für eine sich bewegende Maschine, wie z.B. einen Industrieroboter, vorgesehen. Aufgrund der sich ändernden Grenzen gemäß dieser Variante des erfindungsgemäßen Verfahrens können auch verschiedenen Schutzzonen in der Umgebung der im Betrieb befindlichen Maschine definiert werden, die sich mit der geplanten Bewegung der Maschine ändern.

Das dreidimensionale Bild bzw. dessen Bildpunkte können mit wenigstens einem bildgebenden Sensor erzeugt werden. Werden insbesondere mehrere bildgebende Sensoren zum Erzeugen des dreidimensionalen Bildes verwendet, wie dies nach einer Variante des erfindungsgemäßen Verfahrens vorgesehen ist, dann können die Sensoren aufgrund von von den Sensoren erzeugten zweiten Signalen gegenseitig plausibilisiert werden.

Bei Batterie betriebenen Sensoren sollte jedoch sichergestellt sein, dass dieselben Bereiche von mehreren Sensoren überwacht werden, da es andernfalls dazu kommen kann, dass bei Ausfall eines Sensors, bedingt durch einen Energieverlust, ein Notstopp der Maschine ausgelöst werden muss.

Mit dem erfindungsgemäßen Verfahren kann sowohl eine ungewollte Bewegung der im Betrieb befindlichen Maschine als auch unzulässige Bewegungen von Menschen erkannt werden, die sich prinzipiell im Arbeitsraum der Maschine aufhalten dürfen bzw. müssen, um beispielsweise mit dem Roboter zu kooperieren und gemeinsam eine Fertigungsaufgabe zu lösen.

Erfindungsgemäß ist es vorgesehen, dass sich eine Person im Arbeitsraum aufhält und eine Sollposition der Person im Soll-Zustand des Arbeitsraums mit berücksichtigt wird. Mit dem erfindungsgemäßen Verfahren ist es aber auch möglich zu erkennen, wenn sich eine Person unbeabsichtigt oder auf fehlerhafte (bzw. nicht vorgesehene/vorgeschriebene) Weise der im Betrieb befindlichen Maschine nähert. Es ist jedoch auch denkbar, dass eine Person mit der im Betrieb befindlichen Maschine arbeiten soll. Für diesen Fall ist es vorgesehen, insbesondere den Bewegungsablauf bzw. die Soll-Positionen der Person im Raum mit zu modellieren, sodass nur dann das erste Signal erzeugt wird, wenn die Person von ihrer Soll-Position abweicht. Mit dieser Variante des erfindungsgemäßen Verfahrens ist es demnach möglich, auch mit der im Betrieb befindlichen Maschine arbeitende Personen zuverlässig vor einer gefährlichen Situation beim Betreiben der Maschine zu warnen oder gegebenenfalls die Maschine automatisch zu stoppen. Der Bewegung einer Person ist ein kinematisiertes Menschmodell zugeordnet, das den Menschen mit seinen Gelenken und Gliedmaßen nachbildet. Dabei sind verschieden genaue Modelle denkbar, wobei eine sehr grobe Nachbildung beispielsweise ein Zylinder sein kann, dessen Mittelachse mit einer gemittelten Position der Körperlängsachse dieser Person überstimmt und dessen Radius von der Reichweite der Arme bzw. Fingerspitzen beschrieben wird. Ein Modell des Menschen kann zusätzlich Pufferzonen beinhalten, um der Unsicherheit der Modellierung bzw. Posenerkennung Rechnung zu tragen.

Die Bewegung der Maschine kann einem die Bewegung der Maschine modellierendes Maschinenmodell zugeordnet sein, das zur Ermittlung des Soll-Zustands des Arbeitsraums verwendet wird. Ein solches Maschinenmodell ist beispielsweise ein bei Industrierobotern verwendetes kinematitisiertes CAD-Modell, das zumindest die äußere Hülle des Roboters beschreibt und in soweit kinematisiert ist, als dass die Bewegungen des Roboters über das kinematisierte Modell nachgebildet werden können. Das Wissen über die Roboterkinematik wird typischerweise auch von einer Steuerungsvorrichtung der Maschine zur Steuerung der Maschine verwendet. Unter Steuerung wird in diesem Zusammenhang auch eine Regelung der Maschine verstanden. Da das CAD-Modell der Maschine üblicherweise zu detailliert für eine Berechnung von möglichen Kollisionen mit anderen Objekten Umgebung in Echtzeit ist, können auch vereinfachte Modelle zur Anwendung kommen, beispielsweise so genannte "Spheres", d.h. Kugelmodelle bei denen jede Achse des Roboters durch eine Kugel abgebildet wird, oder so genannte "Line Swept Speres" (Kugeln, die entlang einer Achse des Roboters ausgedehnt sind), "Axis aligned boxes" (Quader, welche die Achsen eines Roboters entlang der Koordinatenachsen des Weltkoordinatensystems umschließen), "Oriented boxes" (Quader, welche die Achsen eines Roboters entlang der Roboterstruktur umschließen) oder auch konvexe Hüllen. Ähnliche vereinfachende Modelle lassen sich für alle Objekte einer Arbeitszelle eines Roboters finden, für die üblicherweise ein CAD-Modell vorhanden ist.

Ein Vorteil der Modellierung der Maschinenbewegungen kann sein, dass diese im Modell des Arbeitsraums bzw. in den von den Sensoren gelieferten Punktewolken antizipiert bzw. nachvollzogen werden können und so die Gefahr einer Fehlinterpretation im dreidimensionalen Bild bzw. Modell zumindest verringert werden kann.

Nach einer Variante des erfindungsgemäßen Verfahrens wird das erzeugte dreidimensionale Bild mittels einer vorgegebenen Bewegung der Maschine oder durch das Einnehmen einer bestimmten Pose während einer Überprüfungsphase überprüft. Somit ist es möglich, eine das dreidimensionale Bild erzeugende Vorrichtung, wie z.B. die bildgebenden Sensoren, zu überprüfen. Insbesondere ist vorgesehen, dass die Bewegung des Roboters während dieser Überprüfungsphase in sicherer Technik überwacht wird, also durch geeignete Maßnahmen sichergestellt wird, dass sich der Roboter wie programmiert bewegt, z.B. durch redundante Erfassung und Auswertung der Achsstellungen des Robotersystems. Da dadurch ausgeschlossen werden kann, dass sich der Roboter fehlerhaft bewegt, müssen gegebenenfalls nicht erklärbare Abweichungen im dreidimensionalen Bild durch fehlerhafte bildgebende Sensoren oder die Modellbildung verursacht sein. Eine zyklische oder kontinuierliche Überprüfung der Funktionstüchtigkeit der das dreidimensionale Bild erzeugenden Vorrichtung kann so die Sicherheit des Gesamtsystems signifikant erhöhen.

In einer weiteren Variante des erfindungsgemäßen Verfahrens ist vorgesehen, dass das Überprüfung der Sensoren nicht während einer speziellen oder zyklisch wiederkehrenden Überprüfungsphase vollzogen wird, sondern diese Überprüfung fortlaufend geschieht. Insbesondere kann die Überprüfung anhand der normalerweise vom Roboter durchzuführenden Arbeitsbewegungen erfolgen.

In einer weiteren Variante zur Überprüfung der Funktionstüchtigkeit der Sensoren ist vorgesehen, dass diese selbst erkennen, ob sie noch den gleichen Bildausschnitt überwachen. Unter der Voraussetzung, dass sich die Sensoren immer am gleichen Ort befinden, können ständig wiederkehrende Elemente im Sensorsignal für diese Überprüfung verwendet werden. Diese Elemente können natürlichen Ursprungs sein, z.B. Objektkanten, oder künstlich eingebracht worden sein, z.B. Reflektormarken, die zudem noch deutlich besser im Sensorsignal zu entdecken sind als natürliche Marken. Selbst wenn zeitweise bestimmte Elemente des Sensorsignals nicht wiedererkannt werden können, weil sich beispielsweise ein bewegtes Objekt/Subjekt vor dem Sensor befindet, sollte der gesamte Überwachungsbereich eines Sensors immer noch ausreichend groß sein, um einige wenige Merkmale im Sensorsignal von einem Umlauf zum nächsten wiederzuerkennen und damit die Funktionstüchtigkeit bzw. den Standort des Sensors sicher zu überprüfen. Eine solche Überprüfung ist insbesondere darauf ausgelegt zu erkennen, ob der Sensor, der in bevorzugter Ausgestaltung portabel (ortsflexibel) ist, an einen anderen Standort versetzt worden ist bzw. gerade versetzt wird, was wiederum Konsequenzen auf die Berücksichtigung der Sensordaten dieses Sensors für den Zeitraum des Versetzens hat.

Es kann vorgesehen sein, dass jeder Sensor dem übergeordneten System meldet, ob er noch verlässliche Werte liefert. Insbesondere kann vorgesehen sein, dass jeder Sensor zu seinen Messwerten Fehlerwerte mitliefert, die vom übergeordneten System berücksichtigt werden können.

In einer weiteren Variante des erfindungsgemäßen Verfahrens kann es vorgesehen sin, dass die Sensoren unbestimmt bewegt sein können (beispielsweise durch eine Person getragen) und dass die Sensoren während dieser unbestimmten Bewegung trotzdem fortlaufend ihren Standort ermitteln können (beispielsweise über bekannte SLAM-Verfahren, "Simultaneous Localization And Mapping") und so auch während der unbestimmten Bewegung und auch an ihrem neuen Standort sofort Beiträge zur Gewinnung des Ist-Zustandes des Arbeitsraums liefern können. Insbesondere kann vorgesehen sein, dass der Sensor, sobald er merkt, dass er wieder zur Ruhe gekommen ist, selbsttätig eine Referenzmessung seiner neuen Umgebung vornimmt, d.h., er versucht im Sensorsignal diejenigen Anteile zu identifizieren, die ortsfest sind, womit er erneut seine eigene Position genauer bestimmen kann, als dies mittels der zuvor angewandten SLAM-Verfahren war.

Das dreidimensionale Bild kann ein erstes Teilbild vom Arbeitsraum und ein zweites Teilbild eines vom Arbeitsraum unabhängigen Sperrbereichs aufweisen. Dann kann das erste Signal erzeugt werden, wenn die Analyse des dreidimensionalen Bildes ergibt, dass die Maschine, ein vorbestimmter Teil der Maschine, eine Person und/oder ein vorbestimmter Teil einer Person sich innerhalb des Sperrbereichs befindet. Im Arbeitsraum soll sich in der Regel die Maschine oder zumindest ein vorbestimmter Teil der Maschine (oder eine Person oder ein vorbestimmter Teil einer Person) befinden. Verlässt die Maschine oder dieser vorbestimmte Teil der Maschine (oder eine Person oder ein vorbestimmter Teil einer Person) diesen Arbeitsraum oder betritt den Sperrbereich, dann ergibt diese Variante des erfindungsgemäßen Verfahrens ein zuverlässiges Erzeugen des ersten Signals, sodass gegebenenfalls die Maschine automatisch abgeschaltet werden kann.

Der Arbeitsraum kann auch in einen ersten Teilarbeitsraum und einen zweiten Teilarbeitsraum unterteilt sein, sodass das erste Signal erzeugt wird, wenn der Ist-Zustand des ersten Teilarbeitsraums vom Soll-Zustand des ersten Teilarbeitsraums abweicht und ein drittes Signal erzeugt wird, wenn der Ist-Zustand des zweiten Teilarbeitsraums vom Soll-Zustand des zweiten Teilarbeitsraums abweicht. Die beiden Teilarbeitsräume sind z.B. ein Schutzfeld und ein dem Schutzfeld vorgelagertes Warnfeld. Dann kann beim Betreten des Schutzfeldes z.B. die Maschine automatisch gestoppt werden und beim Betreten des Warnfeldes lediglich ein Warnsignal abgegeben werden.

Die zweite Aufgabe der Erfindung wird gelöst durch eine Vorrichtung zum Sichern eines Arbeitsraums gemäß dem Patentanspruch 8.

Die erfindungsgemäße Vorrichtung zum Sichern eines Arbeitsraums ist demnach geeignet, das erfindungsgemäße Verfahren zum Sichern eines Arbeitsraums durchzuführen.

Die Vorrichtung zum Erzeugen eines dreidimensionalen Bilddatensatzes kann derart eingerichtet sein, eine Serie dreidimensionaler Bilddatensätze vom Arbeitsraum zu erzeugen, und die Auswertevorrichtung kann derart eingerichtet sein, die einzelnen dreidimensionalen Bilddatensätze dahingehend zu analysieren, ob die jeweiligen Ist-Zustände des Arbeitsraums von den entsprechenden Soll-Zuständen des Arbeitsraums abweichen, und das erste Signal aufgrund der einzelnen analysierten dreidimensionalen Bilddatensätze zu erzeugen, wenn einer der Ist-Zustände des Arbeitsraums vom entsprechenden Soll-Zustand des Arbeitsraums abweicht. Insbesondere kann die Auswertevorrichtung so eingerichtet sein, dass sie mit redundanten und mehrdeutigen Sensorinformationen umgehen kann, d.h., sie kann in der Lage sein, die Bilddaten von verschiedenen Sensorquellen so zu fusionieren, dass ein in sich konsistentes Abbild des Arbeitsraums entsteht. Die Fusion kann über an sich bekannte Matching-Verfahren erfolgen, zum Beispiel über aus der Photogrammetrie bekannte Verfahren wie "area-based matching" oder "least-squares matching" zum automatischen Zuordnen homologer Punkte. Insbesondere für das Zusammenfügen von mehreren 3D-Scans (d.h. Matching von 3D-Sensordaten bzw. Registrieren von 3D-Sensordaten in einem gemeinsamen Koordinatensystem) zu einer konsistenten 3D-Karte sind in den letzten Jahren verschiedene Verfahren vorgestellt worden, die sich grob in drei Kategorien unterteilen lassen:
- Matching als Optimierungsproblem,
- merkmalsbasiertes Matching und
- hybride Verfahren als Kombination der beiden vorgenannten Verfahren.

Ein bekannter Vertreter und häufig verwendeter Algorithmus des Matching als Optimierungsproblems ist der ICP-Algorithmus (iterativer Algorithmus der nächsten Punkte, engl. iterative closest points). Bei der merkmalsbasierten Optimierung werden in den einzelnen Scans zunächst markante Merkmale bestimmt, deren Lage relativ zur Aufnahmeposition bestimmt werden muss, bevor die Scans registriert werden können.

Der Soll-Zustand des Arbeitsraums bzw. die Soll-Bewegung der Maschine kann mit dem dreidimensionalen Modell des Soll-Zustands modelliert sein. Die Auswertevorrichtung ist dann derart ausgeführt, dass sie den dreidimensionalen Bilddatensatz bzw. die Serie von dreidimensionalen Bilddatensätzen auf dieses Modell abbildet und bei einer Abweichung das erste Signal erzeugt, das z.B. für ein automatisches Abschalten der Maschine verwendet wird.

Die Auswertevorrichtung kann derart eingerichtet sein, dass sie das erste Signal nur dann erzeugt, wenn sich aufgrund einer vorgegebenen Anzahl von hintereinanderfolgenden analysierten dreidimensionalen Bilddatensätzen ergibt, dass die jeweiligen Ist-Zustände des Arbeitsraums von den entsprechenden Soll-Zuständen des Arbeitsraums abweichen. Aufgrund dieser Variante der erfindungsgemäßen Vorrichtung kann eine Gefahr eines unbeabsichtigten Erzeugens des ersten Signals zumindest verringert werden.

Die Grenzen des Arbeitsraums können flexibel eingestellt werden und sich auf die Maschine (Roboter oder Werkzeuge), Werkstücke, sonstige Zellkomponenten (Arbeitstische, ...) beziehen. Dabei können sich die Grenzen mit einer Bewegung der beweglichen Komponenten wie zum Beispiel Maschine (Roboter oder Werzeuge), Werkstücke und/oder Menschen ändern.

Die Vorrichtung zum Erzeugen des dreidimensionalen Bilddatensatzes kann einen zweidimensionalen bildgebenden Sensor, der um eine Achse des zweidimensionalen bildgebenden Sensors schwenkt oder sich dreht, und/oder einen dreidimensionalen bildgebenden Sensor aufweisen. Der dreidimensionale bildgebende Sensor ist z.B. eine 3D-Kamera, die sich um eine Achse des dreidimensionalen bildgebenden Sensors drehen kann, oder eine stationäre 3D-Kamera auf einem Parabolspiegel, wobei über den Spiegel eine Erfassung eines 360°-Bereiches um die Kamera herum möglich ist.

Der zweidimensionale Sensor kann horizontal und um seine Kippachse nickend aufgestellt sein. Der zweidimensionale Sensor kann auch vertikal und um seine Hochachse rotierend aufgestellt sein. Die Rotation kann fortlaufend erfolgen. Eine Hin- und Herbewegung ist auch denkbar. Bei rotierenden zweidimensionalen Sensoren sollte die Rotationsgeschwindigkeit des gesamten Sensors von der Rotationsgeschwindigkeit der internen Sensoreinrichtung (minimal) abweichen, damit möglichst viele verschiedene Weltpunkte (Punkte im Raum) vermessen werden können. Somit ergibt sich eine spiralförmige Abtastung von Punkten im Raum. Über die Rotationsgeschwindigkeiten kann festgelegt werden, wie dicht Messstrahlen nebeneinander liegen. Sind die Geschwindigkeiten der Sensoren synchronisiert, werden immer die gleichen Weltpunkte vermessen, was unter anderem zur Plausibiliserung der Sensordaten über die Zeit genutzt werden kann.

Ein dreidimensionaler Sensor ist z.B. eine rotierende 3D-Kamera, die z.B. um ihre Hoch- oder Kippachse rotierend aufgestellt ist und insbesondere ein möglichst großes Gesichtsfeld (Weitwinkel) aufweist.

Es sind auch stationäre 2D-Kameras (Stereokameras) oder auch mehr als zwei Kameras als Vorrichtung zum Erzeugen des dreidimensionalen Bilddatensatzes möglich.

Ein Vorteil von rotierenden oder omnidirektionalen Sensoren (Scanner) kann sein, dass diese einen im Vergleich zu normalen stationären Kameras größeren Bereich abdecken können, ohne dass es zu wesentlichen Verzerrungen kommt (wie beispielsweise bei extrem weitwinkligen Kameras), die erst aufwändig korrigiert werden müssten.

Erhältliche Scanner können die Sicherheitskategorie 3 gemäß EN 945 aufweisen (Ein-Fehler-Sicherheit).

Die Vorrichtung zum Erzeugen des dreidimensionalen Bilddatensatzes kann mehrere zweidimensionale und/oder dreidimensionale bildgebende Sensoren aufweisen und die Auswertevorrichtung kann derart eingerichtet sein, dass sie die von den zweidimensionalen und/oder dreidimensionalen bildgebenden Sensoren erzeugten Signale auf ein Funktionieren der Vorrichtung zum Erzeugen des dreidimensionalen Bilddatensatzes auswertet.

Die Sensoren können relativ flexibel aufgestellt werden. Dies betrifft sowohl den Aufstellort in der Ebene (x, y) als auch die Montagehöhe (z). Die Sensoren können portabel sein und derart ausgeführt sein, dass sie vom Werker einfach in der Höhe justiert werden können, so dass je nach Aufgabenstellung der Überwachungsbereich relativ gut, d.h. ohne Abschattungen (tote Winkel) erfasst werden kann.

Die Flexibilität der erfindungsgemäßen Vorrichtung kann insbesondere dann relativ hoch sein, wenn die erfindungsgemäße Vorrichtung gemäß einer Variante eine Vorrichtung zum drahtlosen Übertragen von von dem zweidimensionalen und/oder dreidimensionalen bildgebenden Sensor erzeugten Signalen zur Auswertevorrichtung aufweist und ohne Netzstrom betrieben werden kann. Es können lediglich die eine geringe Bandbreite beanspruchenden Sicherheitssignale, nicht aber die kompletten Bilddaten übertragen werden. Dazu weisen die Sensoren eine eigene Auswerteeinheit auf, die über eine zentrale Recheneinheit konfiguriert werden.

Die Sensoren können auch energieautark sein, indem ihre Energieversorgungen z.B. eine Batterie umfassen, damit sie ortsflexibel aufgestellt werden können.

Bei Batterie betriebenen Sensoren kann es beispielsweise aufgrund einer geforderten Sicherheitsstufe erforderlich sein, dass dieselben Bereiche von mehreren Sensoren überwacht werden, da es andernfalls dazu kommen kann, dass bei Ausfall eines Sensors, bedingt durch einen Energieverlust, ein Notstopp der Maschine ausgelöst werden muss.

Die Auswertevorrichtung kann derart eingerichtet sein, dass sie eine den dreidimensionalen Bilddatensatz erzeugende Vorrichtung mittels einer vorgegebenen Bewegung der Maschine während einer Überprüfungsphase oder durch das Einnehmen einer bestimmten Pose während einer Überprüfungsphase überprüft. Das Überprüfen kann auch fortlaufend während des laufenden Betriebs erfolgen, wenn eine zusätzliche Einrichtung, wie zum Beispiel eine Rechen- und Sensoreinheit zur redundanten Erfassung und Auswertung von Achsstellungen des Roboters, die korrekte Funktionsweise des Roboters überwacht.

Insbesondere kann es vorgesehen sein, dass die Bewegung des Roboters während dieser Überprüfungsphase in sicherer Technik überwacht wird, also durch geeignete Maßnahmen sichergestellt wird, dass sich der Roboter wie programmiert bewegt, z.B. durch redundante Erfassung und Auswertung der Achsstellungen des Robotersystems. Da dadurch ausgeschlossen werden kann, dass sich der Roboter fehlerhaft bewegt, müssen gegebenenfalls nicht erklärbare Abweichungen im dreidimensionalen Bild durch fehlerhafte bildgebende Sensoren oder die Modellbildung verursacht sein. Eine zyklische oder kontinuierliche Überprüfung der Funktionstüchtigkeit der das dreidimensionale Bild erzeugenden Vorrichtung kann so die Sicherheit des Gesamtsystems signifikant erhöhen.

Die erfindungsgemäße Vorrichtung kann eine mit der Auswertevorrichtung verbundene Warnvorrichtung aufweisen, die durch das von der Auswertevorrichtung erzeugte Signal aktiviert wird. Anstelle oder in Kombination mit der Warnvorrichtung kann vorgesehen sein, dass die Auswertevorrichtung mit der Maschine verbunden ist und die Maschine mittels des von der Auswertevorrichtung erzeugten ersten Signals automatisch auf eine gemäß den Sicherheitsnormen sicher reduzierte Geschwindigkeit setzt, damit die Maschine mit ihrem Arbeitsprogramm fortfahren kann, wie dies durchaus üblich ist, wenn beispielsweise nur ein Warnfeld der Maschine verletzt wurde. Das erste Signal kann aber auch dazu verwendet werden, die Maschine automatisch abzuschalten, z.B. wenn das sogenannte Schutzfeld verletzt worden ist.

Um das erfindungsgemäße Verfahren zu realisieren, kann zunächst die Vorrichtung zum Erzeugen des dreidimensionalen Bilddatensatzes aufgestellt werden. Umfasst die Vorrichtung zum Erzeugen des dreidimensionalen Bilddatensatzes wenigstens zwei bildgebende Sensoren, können diese sich gegenseitig ergänzen und überwachen.

Die bildgebenden Sensoren können an einem Stativ befestigt sein, dessen Höhe insbesondere flexibel angepasst werden kann, um unerwünschte "tote Winkel" beim Aufnehmen des Arbeitsraums zu vermeiden oder zumindest zu minimieren.

Der bildgebende Sensor kann auch unmittelbar im erreichbaren Arbeitsraum der im Betrieb befindlichen Maschine aufgestellt werden. Dies ist insbesondere dann ohne eine wesentliche Einschränkung des Arbeitsraums der Maschine möglich, wenn das Stativ des Sensors die Form einer relativ dünnen Stange hat. Dies kann beispielsweise einen Vorteil gegenüber gewöhnlichen Sicherungsvorrichtungen in Form eines Schutzzauns haben, dessen Ausmaße den Arbeitsraum der Maschine, insbesondere eines Roboters, erheblich einschränken können. Diese Sensoren können ebenfalls als Komponenten des Arbeitsraums des Roboters mitmodelliert werden, so dass bei Verfahren zur automatischen Kollisionsvermeidung und kollisionsfreien Bahnplanung mitberücksichtigt werden können.

Um den Soll-Zustand des Arbeitsraums zu erhalten, kann zunächst die statische Szene des Arbeitsraums mit den Sensoren aufgenommen werden. Dies ergibt dann z.B. das Modell des Soll-Zustands des Arbeitsraums.

Um den Soll-Zustand des Arbeitsraums bzw. um das Modell vom Soll-Zustand des Arbeitsraums möglicht gut zu erhalten, kann die Zeit für das Aufnehmen des Arbeitsraums für den Soll-zustand länger als während des Durchführens des erfindungsgemäßen Verfahrens dauern, um ein möglichst exaktes Abbild des Arbeitsraums zu erhalten. Insbesondere kann die zur Verfügung stehende Zeit dazu genutzt werden, bessere und damit rechenzeitintensive Algorithmen zur Registrierung von Sensorscans und zur Modellierung der Szene zu verwenden.

In den Soll-Zustand bzw. in das Modell kann auch ein Vorwissen über die Szene genutzt werden. Ein Vorwissen ist z.B. ein bekanntes Modell der Zelle der Maschine bzw. des Roboters.

Zur Detektion von überlappenden Sensorbereichen, zur Kalibration und/oder zum Testen der Funktionstüchtigkeit der Sensoren kann eine Maschine, insbesondere ein Roboter, gezielt bewegt werden (Bahnfahrten bzw. Einnehmen von bestimmten Posen). Wird dieselbe Bewegung bzw. Pose des Roboters von zwei oder mehr unterschiedlichen Sensoren aus beobachtet, kann daraus abgeleitet werden, wie die Sensoren zueinander stehen (Registrierung der Sensorposition).

Durch die vorbestimmte Bewegung der Maschine können die Sensoren kalibriert werden, d.h. es können die Aufstellorte der Sensoren in Bezug auf die Maschine herausgefunden werden. Es kann ein Sicherheitstest der Sensoren über eine sicher überwachte Bewegung der Maschine durchgeführt werden. Somit kann sichergestellt werden, dass sich die Maschine wie gewünscht bewegt.

Es können sogenannte SLAM (Simultaneous Localization And Mapping) Verfahren für den Vergleich des dreidimensionalen Bildes bzw. dessen Bildpunkte mit dem Modell des Soll-Zustandes zum Einsatz kommen (z.B. Matching von Punktewolken, Sensorstandorte lokalisieren).

Wenn mehrere bildgebende Sensoren verteilt über eine Einsatzumgebung verwendet werden, dann gibt es auch eine gewisse Ähnlichkeit zu sogenannten "Roboterschwärmen" ("Swarm Robotics"), die gemeinsam eine Umgebung auskundschaften. Wie bei Roboterschwärmen kommen auch in dieser Erfindung SLAM-Algorithmen zum Einsatz, um die Scans mehrerer Sensoren zueinander in Bezug zu setzen und in einem gemeinsamen Koordinatensystem zu registrieren.

Das den Soll-Zustand beschreibende Modell braucht jedoch z.B. dann nicht notwendigerweise um dynamische Komponenten (Kinematikmodelle) erweitert werden, wenn der Arbeitsraum so groß gefasst werden kann, dass jede Verletzung des Arbeitsraums, d.h. ein Durchdringen von außen nach innen, dadurch verhindert werden kann, dass der Arbeitsraum groß genug ist, d.h. wenn sich die Maschine vollständig innerhalb des Arbeitsraums bewegt und sich Personen normalerweise außerhalb des Arbeitsraums befinden. Dann soll das erste Signal, d.h. das von der Auswertevorrichtung erzeugte Signal nur dann erzeugt werden, wenn die Analyse des dreidimensionalen Bildes bzw. des dreidimensionalen Bilddatensatzes darauf schließen lässt, dass sich eine Person innerhalb des Arbeitsraums befindet.

Für eine möglichst gute Performance der erfindungsgemäßen Vorrichtung kann die Aufstellung der Sensoren dahingehend optimiert werden, dass keine "toten Winkel" entstehen, d.h. dass keine Räume innerhalb des Arbeitsraums entstehen, die von den Sensoren nicht erfasst werden können. Eine solche optimierte Aufstellung der Sensoren kann z.B. mittels einer Vorabsimulation der Messstrahlen der Sensoren und gegebenenfalls der Maschinenbewegungen erfolgen.

Wenn sich bildgebende Sensoren außerhalb des Arbeitsraums befinden, dann kann die Gefahr bestehen, dass sich eine Person in dem nicht in den Arbeitsraum fallenden Bereich zwischen dem Sensor und dem Arbeitsraum aufhält. Für diesen Fall kann es vorgesehen sein, wenigstens einen weiteren bildgebenden Sensor derart anzuordnen, dass die Grenzen des Arbeitsraums aus einer anderen Perspektive überwacht werden. Sollte eine Situation eintreten, in der nicht mehr ein dreidimensionales Bild vom gesamten Arbeitsraum erzeugt werden kann, dann kann es vorgesehen sein, die Maschine automatisch zu stoppen.

Die Vorrichtung zum Erzeugen des dreidimensionalen Bilddatensatzes bzw. die bildgebenden Sensoren können derart ausgeführt sein, dass sie ständig einen Selbsttest durchführen, ob noch ein dreidimensionales Bild vom gesamten Arbeitsraum erstellt werden kann.

Wenn nicht erfasste Räume/Raumbereiche/Raumgrenzen unkritisch sind, kann die Aufstellung der Vorrichtung zum Erzeugen des dreidimensionalen Bilddatensatzes bzw. die bildgebenden Sensoren beibehalten bleiben. Wenn eine Person oder ein unbekanntes Objekt unerkannt in nicht erfasste Räume des Arbeitsraums eindringen können, dann können zusätzliche bildgebende Sensoren aufgestellt oder die vorhandenen bildgebenden Sensoren in ihrer Position verändert werden.

Ein bildgebender Sensor kann mit seinen Messwerten mehrere Arbeitsräume und Maschinenbewegungen überwachen. Der Sensor muss nicht notwendigerweise an eine Arbeitszelle gebunden sein.

Der Arbeitsraum der im Betrieb befindlichen Maschine bzw. Roboters kann von einem Nutzer oder auch automatisch festgelegt werden. Der Arbeitsraum kann in kartesischen Koordinaten definiert werden. Handelt es sich bei der Maschine um einen Roboter, dann kann der Arbeitsraum auch bezüglich der Achsen des Roboters definiert werden. So kann sich der Arbeitsraum auf den sogenannten Tool Center Point (TCP) des Roboters, ein Werkstück, ein Werkzeug oder den ganzen Roboter beziehen.

Wenn sich der Roboter im Arbeitsraum befinden muss, dann kann eine Sicherheitssteuerung überwachen und gegebenenfalls verhindern, dass der Roboter diesen Arbeitsraum verlässt.

Es kann auch ein Sperrbereich definiert werden, in dem sich der Roboter nicht aufhalten darf. Dann kann die Sicherheitssteuerung überwachen und gegebenenfalls verhindern, dass der Roboter in diesen Sperrbereich eindringt.

Die Eigenschaft eines Bereiches (Arbeitsraum, Sperrbereich) kann im laufenden Betrieb durch Nutzerinteraktion oder durch das Programm dynamisch angepasst werden. Diese Bereiche können durch die Sicherheitssteuerung des Roboters überwacht werden. Die Verwendung der hier über den Raum verteilten Sensoren kann die Grundlage für die Entscheidung der Sicherheitssteuerung sein oder zusätzliche Sicherheit bringen, wenn beispielsweise ein Arbeits- bzw. Sperrbereich auch anders, z.B. durch redundante Erfassung und Auswertung von Achswerten, zeitgleich erfolgt.

Es können auch zusätzliche Schutzzonen für Personen definiert werden. Ähnlich der Definition von Arbeits- und Sperrbereichen, kann für die Schutzzonen primär das Eindringen einer Person oder eines unbekannten Objekts in die Schutzzonen überwacht werden. Nach einem Eindringen in eine Schutzzone kann weiterhin eine Überwachung der Bewegung der Person stattfinden.

Bei einem Mehrstufenkonzept kann sich dann der Roboter, allgemein die Maschine, langsamer bewegen, sobald ein erster Teilarbeitsraum (auch als Warnfeld bezeichnet) verletzt wird. Wird ein zweiter Teilarbeitsraum (auch als Schutzfeld bezeichnet) verletzt, kann der Roboter, allgemein die Maschine, automatisch anhalten.

Insbesondere wenn Personen mit der Maschine interagieren sollen, muss ein Eindringen einer Person zumindest in bestimmte Teilarbeitsräume erlaubt sein.

Die Definition von Arbeits- und Sperrbereichen sowie Schutzzonen kann durch den Nutzer über ein Mensch-Maschine-Interface (MMI) erfolgen, z.B. durch Einzeichnen in einer 2D-Draufsicht auf ein Roboterzelle, in der sich der Roboter befindet, oder in beliebigen 3D-Ansichten.

Die Zonen bzw. Bereiche können verbunden sein mit Zellkomponenten: Arbeitstische, Roboter (Maschine), Werkzeug, Werkstück oder Person.

Zonen bzw. Bereiche können statisch oder dynamisch sein, z.B. fest an einen Arbeitstisch gebunden sein, z.B. mit dem Roboter (Maschine) mitwandern, z.B. mit einer Person mitwandern oder z.B. sich mit dem derzeit ausgeführten Roboterprogramm (Maschinenprogramm) ändern. Eine Vorausschau des Roboters kann auch genutzt werden, um Schutzräume entsprechend der zukünftigen Lage auszuweiten (und verspätet zu verkleinern). Bei einer relativ hohen Geschwindigkeit können die Schutzräume verkleinert werden.

Es kann insbesondere ein Drei-Stufenkonzept realisiert werden: Befindet sich eine Person außerhalb des Arbeitsraums, bewegt sich die Maschine, insbesondere der Roboter mit der geplanten Geschwindigkeit. Betritt die Person einen ersten Teilarbeitsraum, der insbesondere relativ weit von der Maschine entfernt ist (Fernzone = Warnfeld), wird die Geschwindigkeit der Maschine verringert. Betritt die Person einen zweiten Teilarbeitsraum, der sich relativ nahe an der Maschine befindet (Nahzone = Schutzfeld), wird die Maschine automatisch gestoppt.

Im Betrieb der Maschine kann fortlaufend das Modell des Arbeitsraums angepasst werden, z.B. ähnlich der Abstandsberechnung bei Fahrzeugen, oder es können fortlaufend Messwerte der Sensoren mit erwarteten Messwerten verglichen werden.

Nicht bekannte Objekte bzw. Objektbewegungen fallen auf und können zu einer angepassten Reaktion führen.

Statische Komponenten innerhalb des Arbeitsraums, die immer sichtbar sind, können von der Vorrichtung zur Erzeugung des dreidimensionalen Bilddatensatzes bzw. den Sensoren als Referenz verwendet werden. Dann ist es möglich, dass nur wenn diese Referenz bei einer Umdrehung des oder der Sensoren wiedererkannt werden, davon ausgegangen werden kann, dass der Sensor noch funktionsfähig ist.

Es kann in den Arbeitsraum eine Referenz künstlich eingebracht werden oder eben aus "natürlichen" Zellkomponenten bestehen.

Es kann ein regelmäßiger Test der Vorrichtung zum Erzeugen des dreidimensionalen Bilddatensatzes bzw. der Maschine vorgesehen sein, ob sich die Maschine bzw. die Vorrichtung zum Erzeugen des dreidimensionalen Bilddatensatzes noch erwartungskonform verhalten. Dieser Test kann durch Abfahren einer definierten Bahn bzw. Einnehmen einer bestimmten Pose der Maschine im Falle eines Roboters bestehen.

Es ist auch eine Redundanz in der Bereichsüberwachung möglich, so dass ein Sensor ohne Einschränkung des laufenden Betriebs von einem Ort zu einem anderen verschoben werden kann, weil er z.B. gerade im Weg steht oder von anderer Stelle besser überwachen könnte. Ermöglicht wird dies durch den vorgestellten SLAM-Ansatz, bei dem jeder Sensor zum Gesamtbild des überwachten Arbeitsraums beiträgt, egal ob er bewegt oder unbewegt ist. In einer besonderen Ausgestaltung der Vorrichtung bzw. des Verfahrens kann es vorgesehen sein, dass die Maschine anhält bzw. mit sicher reduzierter Geschwindigkeit langsamer fährt, wenn ein Verrücken eines Sensors erkannt wurde. Insbesondere soll dann angehalten werden, wenn eine sichere Überwachung des Arbeitsraums nicht mehr möglich erscheint, z.B. weil der Arbeitsraum nur von diesem einen jetzt bewegten Sensor überwacht wird und die Fehlerschätzung für die gelieferten Sensorwerte zu große Fehler liefert.

Für die erfindungsgemäße Vorrichtung zum Sichern eines Arbeitsraums ist beispielsweise ein zentraler oder ein dezentraler Ansatz für die Verteilung der Rechenleistung möglich. Auch Mischformen sind denkbar.

Der dezentrale Ansatz könnte zusätzlich den Vorteil der redundanten Rechnung haben. So kann z.B. jeder bildgebende Sensor einen eigenen Sensorrechner aufweisen, die so konfiguriert sein können, dass sie sich gegenseitig überwachen. Genauso können alle involvierten Maschinensteuerungen miteinander vernetzt sein und sich gegenseitig überwachen.

Beim zentralen Ansatz übernimmt entweder eine der involvierten Maschinensteuerungen oder ein Sensorrechner oder ein davon unabhängiger Zentralrechner die Rolle des Masters. An diesen Masterrechner werden alle Achswerte und Sensordaten oder vorverarbeiteten Sensordaten zur Auswertung geschickt.

Wenn die Auswerteeinrichtung als der Zentralrechner realisiert ist, kann dieser das den aktuellen Soll-Zustand des Arbeitsraums beschreibende Modell und das dreidimensionale Bild bzw. den Bilddatensatz errechnen. Der Zentralrechner kann eine Schnittstelle zur Bedienerinteraktion (MMI) verfügen, mittels der beispielsweise ein Nutzer Grenzen des Arbeitsraums festlegen kann. Der Zentralrechner kann diese Grenzen des Arbeitsraums an die Sensorrechner und die Steuerungsvorrichtung der Maschine übermitteln.

Im Rahmen des erfindungsgemäßen Verfahrens ist es z.B. möglich, die Signale der Sensoren mit den den Soll-Zustand des Arbeitsraums beschreibenden Signalen zu vergleichen. In diesem Fall kann jeder Sensorrechner das seinem Sensor zugeordnete Signal individuell und insbesondere mittels der Grenzen des Arbeitsraums vergleichen. Die für den entsprechenden Sensorrechner bestimmten Grenzwerte können aus einem zentral oder lokal berechneten Modell heraus bestimmt werden. Des Weiteren können von den Sensoren abgegebene Signale miteinander verglichen werden.

Anhand der von den Sensoren abgegebenen aktuellen Signale kann auch ein aktuelles Weltmodell aufgebaut werden, das mit einem erwarteten Weltmodell, das den Soll-Zustand des Arbeitsraums entspricht, verglichen wird. Somit werden zwei Modelle verglichen.

Ein bildgebender Sensor kann auch an der Maschine befestigt sein und sich mit der Maschine mitbewegen. Handelt es sich bei der Maschine um einen Roboter, kann dieser Sensor am Roboter so angebracht werden, dass er sich mit dem Roboter mitbewegt. Dieser Sensor kann z.B. oberhalb von Achse 1 an einem Karussell des Roboters oder nach Achse 3 in Richtung einer Roboterhand des Roboters zeigend am Roboter befestigt sein. Ein Vorteil dieser Ausgestaltung ist es, dass insbesondere bei einer engen Personen-Roboter-Kooperation der Teil des Arbeitsraums relativ gut überwacht werden kann, der für die Person am gefährlichsten ist.

Optional kann auch ein bildgebender Sensor zur Modellierung von Werkstücken und dieses Modell wiederum zur automatischen Programmgenerierung bzw. Überwachung/Modifikation der Programmausführung verwendet werden.

Zur Vereinfachung der Erfassungsaufgabe können künstliche Marken in die Umwelt eingebracht werden. Werden z.B. Referenzmarken in die Umwelt eingebracht, kann bei jeder Sensorumdrehung das Vorhandensein dieser Referenzmarken überprüft werden. Bei einer Abweichung vom Nominalbild kann die Maschine automatisch gestoppt werden. Die Sensoren können sich gegenseitig überwachen, feste Marken können als Sicherheitsreferenz eingemessen/definiert werden.

Optional können von der Auswertevorrichtung genau dann Warnmeldungen (Töne, Vibrationen o.ä.) ausgegeben werden, wenn eine Person in die Nähe von Schutzgrenzen kommt oder diese überschreitet. Da Schutzgrenzen nur virtuell existieren, können andere Formen der "Visualisierung" gefunden werden, die den auf verschiedenen Sinneskanälen ansprechen (AR, Haptik, Akustik, ...). Warnmelder können fest in der Roboterzelle installiert sein oder vom Bediener getragen werden. Ausführungsbeispiele der Erfindung sind exemplarisch in den beigefügten schematischen Zeichnungen dargestellt. Es zeigen:
- Fig. 1: zwei Arbeitsräume für mehrere Industrieroboter,
- Fig. 2: ein die erfindungsgemäße Vorrichtung veranschaulichendes Blockschaltbild,
- Figs. 3-5: bildgebende Sensoren,
- Figs. 6, 7: jeweils zwei Arbeitsräume für mehrere Industrieroboter,
- Fig. 8: eine mit einem Industrieroboter interagierende Person in einer Seitenansicht,
- Figs. 9-11: Draufsichten des in der Fig. 8 dargestellten Szenario und
- Fig. 12: ein das erfindungsgemäße Verfahren veranschaulichendes Flussdiagramm.

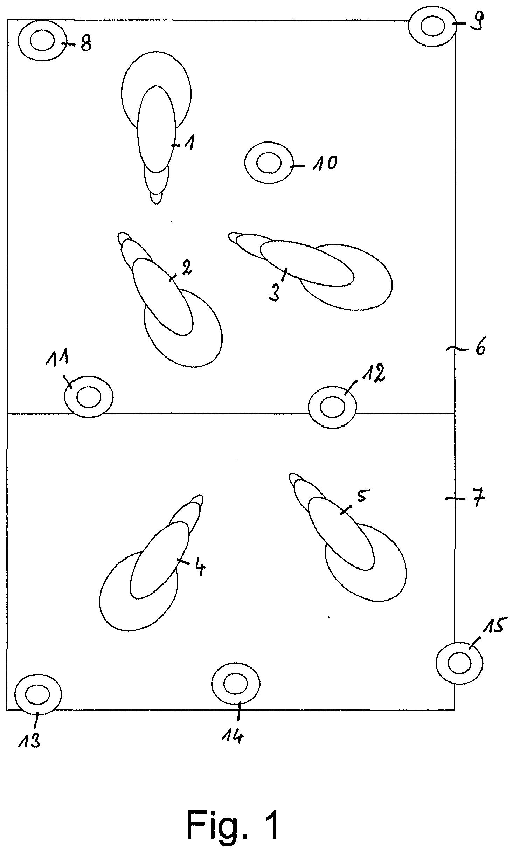

Die Fig. 1 zeigt in einer Draufsicht mehrere Industrieroboter 1-5, die sich im Betrieb innerhalb für sie vorgesehenen Arbeitsräumen 6, 7 bewegen. Im Falle des vorliegenden Ausführungsbeispiels sollen sich die Industrieroboter 1-3 im Arbeitsraum 6 und die Industrieroboter 4, 5 im Arbeitsraum 7 bewegen. Die Arbeitsräume 6, 7 werden auch als Roboterzellen bezeichnet.

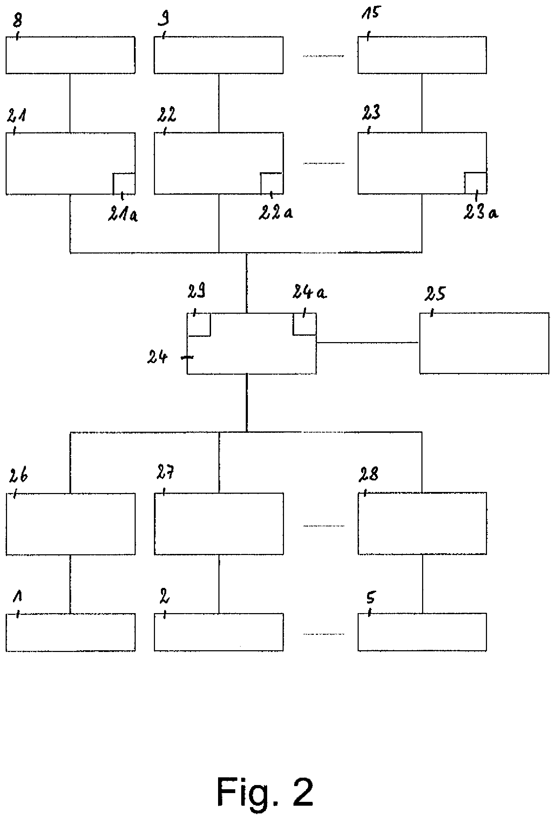

Die Industrieroboter 1-5 weisen jeweils in der Fig. 2 nur für die Industrieroboter 1, 2, 5 dargestellte Robotersteuerungen 26-28 auf, die Bewegungen der einzelnen Industrieroboter 1-5 in allgemein bekannter Weise steuern. Die Robotersteuerungen 26-28 weisen in allgemein bekannter Weise jeweils Modelle und insbesondere kinematisierte CAD-Modelle ihrer Industrieroboter 1-5 auf, die für die Steuerung oder Regelung des jeweiligen Industrieroboters 1-5 verwendet werden.

Die Robotersteuerungen 26-28 der Industrieroboter 1-5 sind im Falle des vorliegenden Ausführungsbeispiels mit einem Rechner 24 verbunden, in dem mittels einer Eingabevorrichtung 25, z.B. einer Tastatur, einer Rechnermaus oder einem Touchscreen, eine in der Fig. 1 nicht näher dargestellte Person Eingaben in den Rechner 24 eingeben kann. Insbesondere kann es sich der Eingabevorrichtung auch um einen der Roboter handelt, der beispielsweise von Hand an die Stellen geführt wird, über die Bereichsgrenzen definiert werden.

Die Fig. 1 zeigt ferner mehrere Sensoren 8-14, die jeweils mit einem in der Fig. 2 gezeigten Sensorrechner 21-23 verbunden sind. In der Fig. 2 sind im Falle des vorliegenden Ausführungsbeispiels nur die Sensorrechner 21-23 der Sensoren 8, 9, 15 dargestellt. Die Sensorenrechner 21-23 sind im Falle des vorliegenden Ausführungsbeispiels wiederum mit dem Rechner 24 z.B. mittels elektrischer Leitungen oder drahtlos verbunden. Im Falle des vorliegenden Ausführungsbeispiels sind die Sensorenrechner 21-23 mit dem Rechner 24 drahtlos verbunden und umfassen jeweils einen Sender 21a-23a, die mit einem Empfänger 24a des Rechners 24 kommunizieren können.

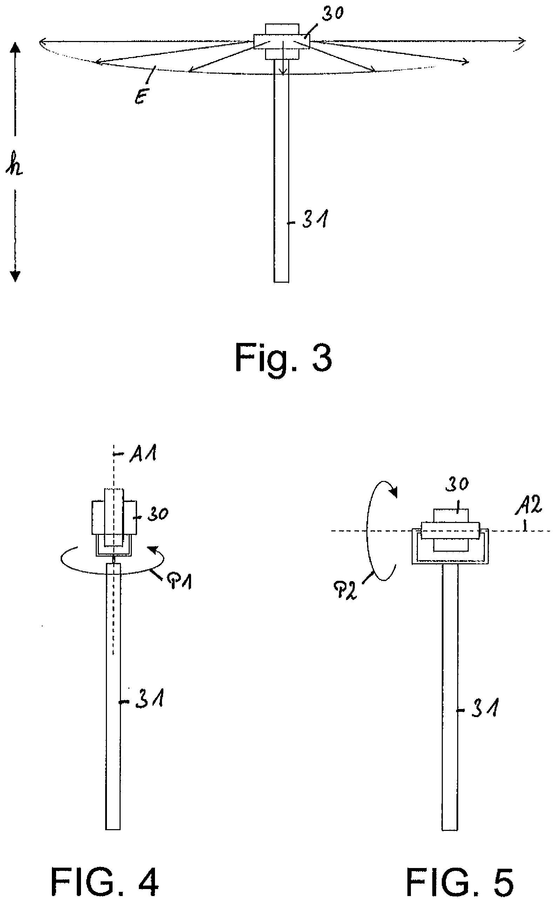

Die Sensoren 8-15 sind dafür vorgesehen, dreidimensionale Bilder von den Arbeitsräumen 6, 7 zu erzeugen. Im Falle des vorliegenden Ausführungsbeispiels handelt es sich bei den Sensoren 8-15 um in der Fig. 3 näher dargestellte 2D-Scanner 30, die an einem Stativ 31 befestigt sind. Die einzelnen 2D-Scanner 30 der Sensoren 8-15 sind im Falle des vorliegenden Ausführungsbeispiels auf unterschiedlichen Höhen h an ihren Stativen 31 befestigt.

Im Falle des vorliegenden Ausführungsbeispiels sind die 2D-Scanner 30 derart ausgeführt, dass sie eine Ebene E mit einem Winkel von 180° abtasten. Außerdem sind im Falle des vorliegenden Ausführungsbeispiels die Scanner so aufgehängt, dass sie um ihre Hoch- bzw. Querachse rotieren können (vgl. Fig. 4 und 5), sodass aus den von den 2D-Scannern 30 erzeugten Signalen der Rechner 24 dreidimensionale Bilddatensätze erzeugen kann, die dreidimensionalen Bildern der Arbeitsraume 6, 7 zugeordnet sind. Die 2D-Scanner 30 sind dabei derart ausgerichtet, dass sie die Arbeitsräume 6, 7 möglichst gut abdecken.

Im Falle des vorliegenden Ausführungsbeispiels tasten die 2D-Scanner 30 bzw. die Sensoren 8-15 ständig die Arbeitsräume 6, 7 ab. Die Sensorenrechner 21-23 bereiten im Falle des vorliegenden Ausführungsbeispiels die von den jeweiligen 2D-Scannern 30 erzeugten Signale auf und leiten die aufbereiteten Signale an den Rechner 24 weiter.

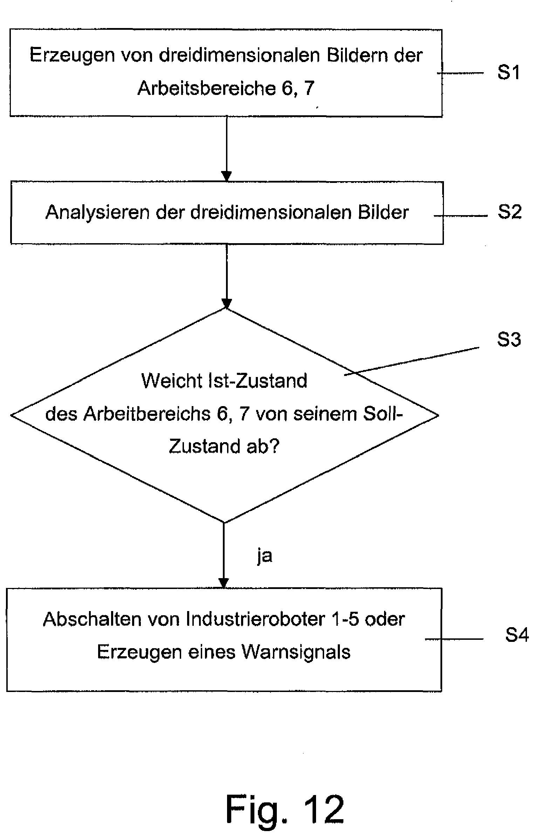

Auf dem Rechner 24 läuft ein Rechnerprogramm, das aus den mittels der Sensorrechner 21-23 aufbereiteten Signalen ständig einen dreidimensionalen Bilddatensatz vom Arbeitsraum 6 und einen dreidimensionalen Bilddatensatz vom Arbeitsraum 7 erzeugt. Der Rechner 24 erzeugt demnach aufgrund der von den Sensoren 8-15 stammenden Signalen eine Serie dreidimensionaler Bilddatensätze, die einer Serie von dreidimensionalen Bildern des Arbeitsraums 6 zugeordnet sind, und eine Serie dreidimensionaler Bilddatensätze, die einer Serie von dreidimensionalen Bildern des Arbeitsraums 7 zugeordnet sind, Schritt S1 eines in der Fig. 12 gezeigten Flussdiagramms. Diese dreidimensionalen Bilder geben demnach den aktuellen Zustand (Ist-Zustand) der Arbeitsräume 6, 7 wieder.

Das auf dem Rechner 24 laufende Rechnerprogramm ist ferner derart ausgeführt, dass es die einzelnen Bilddatensätze automatisch derart analysiert, ob der in den Bilddatensätzen wiedergegebene Ist-Zustand der Arbeitsräume 6, 7 einem Soll-Zustand der Arbeitsräume 6, 7 entspricht, Schritt S2 des in der Fig. 12 gezeigten Flussdiagramms.

Im Falle des vorliegenden Ausführungsbeispiels wird der Soll-Zustand der beiden Arbeitsräume 6, 7 durch die programmierten Bewegungen der Industrieroboter 1-5 und die erlaubten Bewegungsbereiche von in den Arbeitsräumen agierenden Personen definiert. Die Grenzen der Arbeitsräume 6, 7 sowie die Grenzen möglicher Bewegungsbereiche von Personen können außerdem mittels der Eingabeeinrichtung 25 definiert werden.

Außerdem sollen sich im Falle des vorliegenden Ausführungsbeispiels außer den Sensoren 8, 10-14 keine weiteren Objekte oder Personen innerhalb der Arbeitsräume 6, 7 aufhalten.

Die Soll-Bewegungen der Industrieroboter 1-5 ergeben sich aus den programmierten Bewegungsabläufen für die Industrieroboter 1-5. Aufgrund der aktuellen Stellungen der Achsen der Industrieroboter 1-5 und den in den Robotersteuerungen 26-28 hinterlegten Modellen der einzelnen Industrieroboter 1-5 sind die Stellungen der Achsen der Industrieroboter 1-5 im Raum bekannt. Aus diesen Informationen, die die Robotersteuerungen 26-28 dem Rechner 24 zuführen, kann das auf dem Rechner 24 laufende Rechnerprogramm ein aktuelles Soll-Modell für die Arbeitsräume 6, 7 errechnen.

Das auf dem Rechner 24 laufende Rechnerprogramm vergleicht ferner ständig die den Ist-Zuständen der Arbeitsräume 6, 7 darstellenden dreidimensionalen Bilddatensätze mit den entsprechenden Soll-Modellen der Arbeitsräume 6, 7. Dieser Vergleich wird im Falle des vorliegenden Ausführungsbeispiels wie folgt durchgeführt:
Die den dreidimensionalen Bildern der Bilddatensätze zugeordneten Bildpunkte ergeben insbesondere eine konsistente Punktewolke und stehen insbesondere mit den Industrierobotern 1-5 des jeweiligen Arbeitsraums 6, 7 in Beziehung. Ein Bildpunkt ist beispielsweise einer Oberfläche oder einer Kante einer der Industrieroboter 1-5 zugeordnet und wird durch seine Koordinaten im Raum beschrieben.

Mit dem Soll-Modell werden z.B. Geometrieprimitive, beispielsweise Linien, Flächen, Quader oder Ellipsoide, oder Dreiecksflächen derart in die Punktewolke platziert, sodass ein Abstandsfehler eines Bildpunktes des dreidimensionalen Bildes zur entsprechenden Geometrieprimitive bzw. Dreiecksfläche des Modells vom Soll-Zustand minimal ist. Die Geometrieprimitive bzw. Dreiecksflächen lassen sich dann einzeln oder in Kombination den mit dem dreidimensionalen Bild abgebildeten Objekten des Arbeitsraums 6, 7 zuordnen.

Ergibt die Analyse des dreidimensionalen Bildes bzw. der Bildpunkte, dass der Ist-Zustand des entsprechenden Arbeitsraums 6, 7 vom entsprechenden Soll-Zustand des Arbeitsraums 6, 7 abweicht, Schritt S3 des Flussdiagramms der Fig. 12, dann erzeugt der Rechner 24 ein Signal. Dieses Signal wird im Falle des vorneigenden Ausführungsbeispiels dafür verwendet, diejenigen Industrieroboter 1-5 zu stoppen, deren Arbeitsraum 6, 7 aktuell nicht dem Soll-Zustand entspricht, Schritt S4 des Flussdiagramms der Fig. 12. Betritt z.B. ein in der Fig. 1 nicht gezeigte Person den Arbeitsraum 6, so entspricht das dreidimensionale Bild des Arbeitsraums 6 nicht dem Soll-Modell, woraufhin der Rechner 24 das Signal erzeugt und die Industrieroboter 1-3 des Arbeitsraums 6 stoppt.

Aufgrund der Analyse der dreidimensionalen Bilddatensätze kann im Falle des vorliegenden Ausführungsbeispiels das auf dem Rechner 24 laufende Rechnerprogramm erkennen, wenn sich einer der Industrieroboter 1-5 oder eine Person anders als geplant bewegt, da dann das entsprechende dreidimensionale Bild nicht mehr dem Soll-Modell entspricht. Im Falle des vorliegenden Ausführungsbeispiels werden dann ebenfalls diejenigen Industrieroboter 1-5 gestoppt, in deren Arbeitsraum 6, 7 die von der Soll-Bewegung abgewichene Bewegung entdeckt wurde.

Alternativ oder zusätzlich kann das von dem Rechner 24 erzeugte Signal auch einer Warnvorrichtung 29 zugeführt werden, die z.B. aufgrund des vom Rechner 24 erzeugten Signals ein akustisches Signal abgibt.

Ein Abweichen des Ist-Zustandes vom Soll-Zustandes eines der Arbeitsräume 6, 7 kann z.B. dann erkannt werden, wenn sich die Geometrieprimitive bzw. Dreiecksflächen des Modells vom Soll-Zustand nicht mehr mit im dreidimensionalen Bild abgebildeten Objekten des Arbeitsraums 6, 7 zuordnen lassen oder wenn ein Abstandsfehler eines Bildpunktes oder mehrere Bildpunkte des dreidimensionalen Bildes zur entsprechenden Geometrieprimitive bzw. Dreiecksfläche des Modells vom Soll-Zustand einen vorbestimmten Minimalwert überschreitet.

Die Figuren 4 und 5 zeigen alternative Bauformen für die Sensoren 8-15. Die in den Figuren 4 und 5 gezeigten Sensoren weisen ebenfalls jeweils einen 2D-Scanner 30 auf, der an einem Stativ 31 befestigt ist.

Der in der Fig. 4 gezeigte Scanner 30 ist jedoch bezüglich einer vertikal ausgerichteten Achse A1 drehbar an seinem Stativ 31 befestigt. Im Betrieb kann dann der 2D-Scanner 30 bezüglich eines Pfeils P1 rotieren.

Der in der Fig. 5 gezeigte Scanner 30 ist bezüglich einer horizontal ausgerichteten Achse A2 drehbar an seinem Stativ 31 befestigt. Im Betrieb kann dann der 2D-Scanner 30 bezüglich eines Pfeils P2 rotieren.

In der Fig. 1 sind die Grenzen der Arbeitsräume 6, 7 rechteckförmig gezogen. Dies ist jedoch nicht zwingend notwendig. Die Grenzen der Arbeitsraume können im Wesentlichen beliebig insbesondere durch eine Eingabe in die Eingabevorrichtung 25 festgelegt werden.

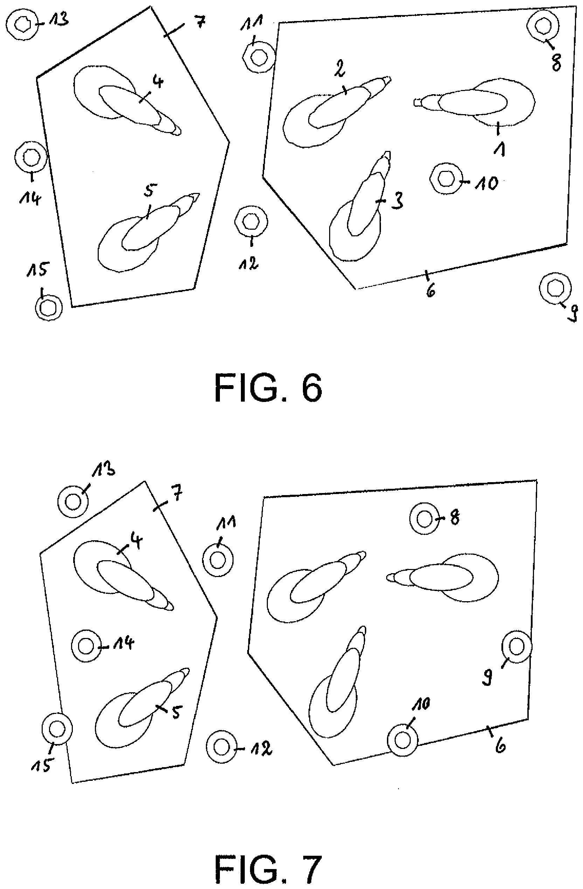

Die Fig. 6 zeigt ein Beispiel, bei dem sich die Grenzen der Arbeitsräume 6, 7 von den Grenzen der Arbeitsräume 6, 7 der Fig. 1 unterscheiden. Die Grenzen der Arbeitsräume 6, 7 brauchen auch nicht notwendigerweise konstant bleiben. Sie können sich auch mit der Zeit ändern, sodass die Grenzen der Arbeitsräumen 6, 7 z.B. zunächst wie in der Fig. 1 gezeigt gezogen sind. Mit der Zeit können sich dann die Grenzen der Arbeitsräume 6, 7 ändern, sodass sie beispielsweise so wie in der Fig. 6 gezeigt gezogen sind.

In den Figuren 1 und 6 sind die Positionen der Sensoren 8-15 unverändert. Die Positionen der Sensoren 8-15 sind jedoch nicht fix vorgegeben und können sich auch mit der Zeit ändern. Dies ist in der Fig. 7 veranschaulicht, in der sich die Positionen der Sensoren 8-15 von den in den Figuren 1 und 6 gezeigten Positionen unterscheiden. Trotz der unterschiedlichen Positionen der Sensoren 8-15 sind die Grenzen der in den Figuren 6 und 7 dargestellten Arbeitsräume 6, 7 dieselben.

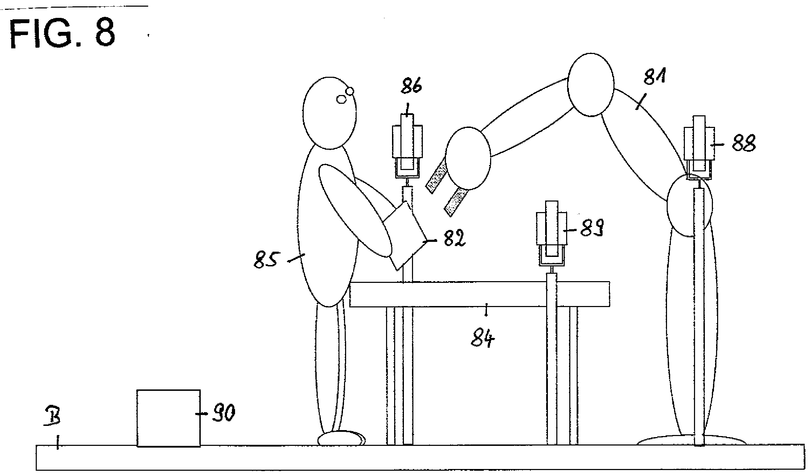

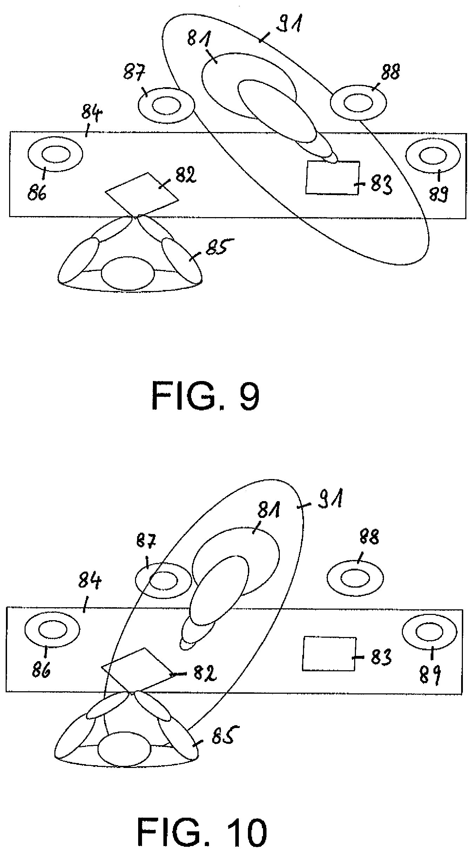

Die Figuren 8-11 veranschaulichen ein weiteres Ausführungsbeispiel, wobei die Fig. 8 eine Seitenansicht und die Figuren 9-11 Draufsichten einer Roboterzelle zeigen.

Die Fig. 8 zeigt einen auf einem Boden B befestigten Industrieroboter 81, der dafür vorgesehen ist, Werkstücke 82, 83 zu bearbeiten. Die Fig. 8 zeigt ferner einen Arbeitstisch 84, auf dem das Werkstück 83 für eine Bearbeitung durch den Industrieroboter 81 liegt, eine Person 85, die das Werkstück 82 in ihren Händen hält, und Sensoren 86-89.

Der Industrieroboter 81 umfasst im Falle des vorliegenden Ausführungsbeispiels eine nicht näher dargestellte Robotersteuerung, in der ein Modell des Industrieroboters 81 hinterlegt ist. Diese Robotersteuerung ist vergleichbar mit den Robotersteuerungen 26-28 der Industrieroboter 1-5 der Fig. 1.

Des Weiteren ist die Robotersteuerung des Industrieroboters 81 mit einem Rechner 90 in nicht dargestellter Weise, beispielsweise mittels einer elektrischen Leitung oder drahtlos, verbunden. Der Rechner 90 ist mit dem Rechner 24 vergleichbar, sodass auch auf diesem ein Rechnerprogramm läuft, das erkennt, ob ein Ist-Zustand eines Arbeitsraums 91 des Industrieroboters 81 von seinem Soll-Zustand abweicht.

Die Sensoren 86-89, die im Falle des vorliegenden Ausführungsbeispiels auf Stativen 31 drehbar gelagerte 2D-Scanner 30 wie in Fig. 4 abgebildet sind, sind in nicht dargestellter Weise mit dem Rechner 90 verbunden, sodass der Rechner 90 stets eine Information über den Ist-Zustand des Arbeitsraums 91 erhält. Im Falle des vorliegenden Ausführungsbeispiel errechnet das auf dem Rechner 90 laufende Rechnerprogramm entsprechend dem auf dem Rechner 24 laufendem Rechnerprogramm dreidimensionale Bilddatensätze vom Arbeitsraum 91 des Industrieroboters 81 und vergleicht diese Bilddatensätze mit einem Modell des Arbeitsraums 91, das den Soll-Zustand des Arbeitsraums 91 wieder gibt.

Im Falle des vorliegenden Ausführungsbeispiels wandert der Arbeitsraum 91 des Industrieroboters 81 mit der Bewegung des Industrieroboters 81. Bei der in der Fig. 9 dargestellten Szene umfasst der Arbeitsraum 91 den Industrieroboter 81 und das Werkstück 83, das der Industrieroboter 81 bearbeitet. Während der Bearbeitung des Werkstücks 83 soll sich insbesondere die Person 85 nicht innerhalb des Arbeitsraums 91 aufhalten. Ist dies trotzdem der Fall, erkennt das auf dem Rechner 90 laufende Rechnerprogramm durch eine Analyse des für diese Szene aufgenommenen dreidimensionalen Bilddatensatzes die Präsenz eines nicht vorgesehenen Objekts, speziell der Person 85. Daraufhin erzeugt der Rechner 90 ein Signal, das im Falle des vorliegenden Ausführungsbeispiel verwendet wird, den Industrieroboter 81 automatisch abzuschalten.

Im Falle des vorliegenden Ausführungsbeispiels ist es jedoch vorgesehen, dass die Person 85 mit dem Industrieroboter 81 interagiert, indem sie das Werkstück 82 hält, das vom Industrieroboter 81 ergriffen und für eine Weiterverarbeitung bewegt werden soll. Für diesen Fall befindet sich zumindest ein Teil der Person 85 innerhalb des Arbeitsraums 91, wie dies in der Fig. 10 dargestellt ist.

Im Falle des vorliegenden Ausführungsbeispiels ist demnach für diese Szene auch die Person 85 im Modell des Soll-Zustands des Arbeitsraums 91 berücksichtigt, sodass der Rechner 90 kein Signal erzeugt, wenn das auf ihm laufende Rechnerprogramm aufgrund der Analyse des entsprechenden dreidimensionalen Bilddatensatzes die Person 85 für den in der Fig. 10 gezeigten Zeitpunkt innerhalb des Arbeitsraums 91 entdeckt.

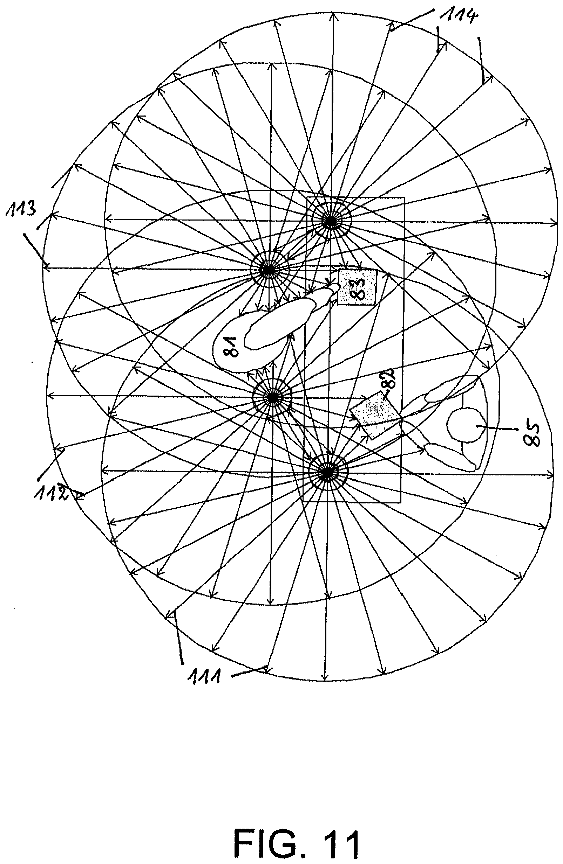

Die Fig. 11 zeigt von den Sensoren 86-89 abgegebene Messstrahlen 111-114 für die in der Fig. 9 gezeigten Szene, wobei der Sensor 86 die Messstrahlen 111, der Sensor 87 die Messstrahlen 112, der Sensor 88 die Messstrahlen 113 und der Sensor 89 die Messstrahlen 114 aussendet. Die 2D-Scanner 30 der Sensoren 86-89 sind im Falle des vorliegenden Ausführungsbeispiels auf ihren Stativen 31 bezüglich der Achsen A1 drehbar gelagert und drehen sich im Betrieb gemäß dem Pfeil P1. Außerdem sind im Falle des vorliegenden Ausführungsbeispiels die 2D-Scanner 30 verschieden hoch an ihren Stativen 31 befestigt. Die Messstrahlen 111-114 überlagern sich und ermöglichen somit den Aufbau eines in sich konsistenten Abbilds des Ist-Zustands des Arbeitsraums 91. Im gezeigten Beispiel werden einige der Messstrahlen 111-114 von der Person 85 und dem Industrieroboter 81 geblockt. Die 2D-Scanner 30 der Sensoren 86-89 sind jedoch an ihren Stativen 31 derart befestigt, dass der Arbeitstisch 84 die Messstrahlen 111-114 nicht blockt.

In den beschriebenen Ausführungsbeispielen wurden (rotierende) 2D-Scanner 30 für das Erzeugen der dreidimensionalen Bilder bzw. Bilddatensätze beschrieben. Als Vorrichtungen zum Erzeugen eines dreidimensionalen Bilddatensatzes können aber auch andere Vorrichtungen, wie z.B. 3D-Sensoren oder 3D-Kameras verwendet werden.

Die beschriebenen Industrieroboter 1-5, 81 sind ebenfalls nur Beispiele von im Betrieb befindlicher Maschinen.

## Patentansprüche

1. Verfahren zum Sichern eines Arbeitsraums, aufweisend folgende Verfahrensschritte:
- Erstellen eines dreidimensionalen Bildes von einem Arbeitsraum (6, 7, 91) einer im Betrieb befindlichen Maschine (1-5, 81),
- Analysieren des dreidimensionalen Bildes dahingehend, ob der Ist-Zustand des Arbeitsraums (6, 7, 91) von einem Soll-Zustand des Arbeitsraums (6, 7, 91) abweicht,
- Erzeugen eines ersten Signals aufgrund des analysierten dreidimensionalen Bildes, wenn der Ist-Zustand des Arbeitsraums (6, 7, 91) vom Soll-Zustand des Arbeitsraums (6, 7, 91) abweicht,
**dadurch gekennzeichnet, dass**
es vorgesehen ist, dass sich eine Person (85) innerhalb des Arbeitsraums (91) aufhält, der Person (85) ein kinematisiertes Menschenmodell zugeordnet ist, und eine Sollposition der Person (85) im Soll-Zustand des Arbeitsraums (91) mit berücksichtigt wird.

2. Verfahren nach Anspruch 1, bei dem eine Serie dreidimensionaler Bilder vom Arbeitsraum (6, 7, 91) erzeugt wird, die einzelnen dreidimensionalen Bilder dahingehend analysiert werden, ob die jeweiligen Ist-Zustände des Arbeitsraums (6, 7, 91) von den entsprechenden Soll-Zuständen des Arbeitsraums (6, 7, 91) abweichen, und das erste Signal aufgrund der einzelnen analysierten dreidimensionalen Bilder erzeugt wird, wenn einer der Ist-Zustände des Arbeitsraums (6, 7, 91) vom entsprechenden Soll-Zustand des Arbeitsraums (6, 7, 91) abweicht, wobei insbesondere das erste Signal nur dann erzeugt wird, wenn sich aufgrund einer vorgegebenen Anzahl von hintereinanderfolgenden analysierten dreidimensionalen Bildern ergibt, dass die jeweiligen Ist-Zustände des Arbeitsraums (6, 7, 91) von den entsprechenden Soll-Zuständen des Arbeitsraums (6, 7, 91) abweichen.

3. Verfahren nach Anspruch 1 oder 2, aufweisend Erzeugen des dreidimensionalen Bildes mit wenigstens einem bildgebenden Sensor (8-15, 86-89), und insbesondere aufweisend Erzeugen des dreidimensionalen Bildes mit mehreren bildgebenden Sensoren (8-15, 86-89) und gegenseitiges Plausibilisieren der Sensoren (8-15, 86-89) aufgrund von von den Sensoren (8-15, 86-89) erzeugten zweiten Signalen.

4. Verfahren nach einem der Ansprüche 1 bis 3, bei dem das Menschenmodell Gelenke und Gliedmaßen der Person (85) und/oder eine Soll-Bewegung der Person (85) nachbildet.

5. Verfahren nach einem der Ansprüche 1 bis 4, bei dem der Maschine (1-5, 81) ein die Bewegung der Maschine (1-5, 81) modellierendes Maschinenmodell zugeordnet ist, das zur Ermittlung des Soll-Zustands des Arbeitsraums (6, 7, 91) verwendet wird, wobei die Maschine (1-5, 81) eine Steuerungsvorrichtung (26-28) zur Steuerung der Maschine (1-5, 81) aufweist und die Steuerungsvorrichtung (26-28) das Maschinenmodell für die Steuerung der Maschine (1-5, 81) verwendet.

6. Verfahren nach einem der Ansprüche 1 bis 5, aufweisend Überprüfen einer das dreidimensionale Bild erzeugenden Vorrichtung mittels einer vorgegebenen Bewegung der Maschine (1-5, 81) während einer Überprüfungsphase, wobei insbesondere die Überprüfungsphase zyklisch wiederholt wird und/oder eingebettet in den normalen Betrieb der Maschine (1-5, 81) ständig andauert.

7. Verfahren nach einem der Ansprüche 1 bis 6, bei dem
- Grenzen des Arbeitsraums (6, 7, 91) sich mit einer Bewegung der Maschine (1-5, 81), wenigstens einer Person und/oder wenigstens eines beweglichen Objekts ändern, und/oder
- das dreidimensionale Bild ein erstes Teilbild vom Arbeitsraum und ein zweites Teilbild eines vom Arbeitsraum unabhängigen Sperrbereichs aufweist und das erste Signal erzeugt wird, wenn die Analyse des dreidimensionalen Bildes ergibt, dass die Maschine, ein vorbestimmter Teil der Maschine, eine Person und/oder ein vorbestimmter Teil der Person sich innerhalb des Sperrbereichs befindet, und/oder
- der Arbeitsraum einen ersten Teilarbeitsraum und einen zweiten Teilarbeitsraum umfasst, das erste Signal erzeugt wird, wenn der Ist-Zustand des ersten Teilarbeitsraums vom Soll-Zustand des ersten Teilarbeitsraums abweicht und ein drittes Signal erzeugt wird, wenn der Ist-Zustand des zweiten Teilarbeitsraums vom Soll-Zustand des zweiten Teilarbeitsraums abweicht, und/oder
- das erste Signal ein Warnsignal ist und/oder dafür verwendet wird, die Maschine (1-5, 81) automatisch abzuschalten.

8. Vorrichtung zum Sichern eines Arbeitsraums, aufweisend:
- eine Vorrichtung (8-15, 86-89) zum Erzeugen eines dreidimensionalen Bilddatensatzes von einem Arbeitsraum (6, 7, 91) einer im Betrieb befindlichen Maschine (1-5, 81) und
- eine Auswertevorrichtung (24, 90), die eingerichtet ist, den dreidimensionalen Bilddatensatz dahingehend zu analysieren, ob der Ist-Zustand des Arbeitsraums (6, 7, 91) von einem Soll-Zustand des Arbeitsraums (6, 7, 91) abweicht, und eingerichtet ist, ein erstes Signal zu erzeugen, wenn die Analyse des Bilddatensatzes ergibt, dass der Ist-Zustand des Arbeitsraums (6, 7, 91) von dessen Soll-Zustand abweicht, **dadurch gekennzeichnet, dass** die Auswertevorrichtung (24, 90) ein kinematisiertes Menschenmodell umfasst, das die Soll-Position einer Person (85) innerhalb des Arbeitsraums (91) modelliert, wobei die Auswertevorrichtung (24, 90) derart eingerichtet ist, die Ist-Position einer Person für den Ist-Zustand des Arbeitsraums (6, 7, 91) und die Soll-Position der Person für den Soll-Zustand des Arbeitsraums zu berücksichtigen.

9. Vorrichtung nach Anspruch 8, deren Vorrichtung (8-15, 86-89) zum Erzeugen eines dreidimensionalen Bilddatensatzes eingerichtet ist, eine Serie dreidimensionaler Bilddatensätze vom Arbeitsraum (6, 7, 91) zu erzeugen und deren Auswertevorrichtung (24, 90) eingerichtet ist, die einzelnen dreidimensionalen Bilddatensätze dahingehend zu analysieren, ob die jeweiligen Ist-Zustände des Arbeitsraums (6, 7, 91) von den entsprechenden Soll-Zuständen des Arbeitsraums (6, 7, 91) abweichen, und deren Auswertevorrichtung (24, 90) eingerichtet ist, das erste Signal aufgrund der einzelnen analysierten dreidimensionalen Bilddatensätze zu erzeugen, wenn einer der Ist-Zustände des Arbeitsraums (6, 7, 91) vom entsprechenden Soll-Zustand des Arbeitsraums (6, 7, 91) abweicht, wobei insbesondere die Auswertevorrichtung (24, 90) eingerichtet ist, das erste Signal nur dann zu erzeugen, wenn sich aufgrund einer vorgegebenen Anzahl von hintereinanderfolgenden analysierten dreidimensionalen Bilddatensätze ergibt, dass die jeweiligen Ist-Zustände des Arbeitsraums (6, 7, 91) von den entsprechenden Soll-Zuständen des Arbeitsraums (6, 7, 91) abweichen.

10. Vorrichtung nach Anspruch 8 oder 9, bei der die Vorrichtung zum Erzeugen des dreidimensionalen Bilddatensatzes einen zweidimensionalen bildgebenden Sensor (8-15, 86-89), der um eine Achse (A1, A2) des zweidimensionalen bildgebenden Sensors (8-15, 86-89) schwenkbar oder drehbar eingerichtet ist, und/oder einen dreidimensionalen bildgebenden Sensor aufweist, wobei insbesondere der dreidimensionale bildgebende Sensor eine 3D-Kamera mit Parabolspiegel ist oder der dreidimensionale bildgebende Sensor um eine Achse des dreidimensionalen bildgebenden Sensors drehbar eingerichtet ist.

11. Vorrichtung nach einem der Ansprüche 8 bis 10, bei der
- die Vorrichtung zum Erzeugen des dreidimensionalen Bilddatensatzes mehrere zweidimensionale und/oder dreidimensionale bildgebende Sensoren (8-15, 86-89) aufweist und deren Auswertevorrichtung (24, 90) eingerichtet ist, von den zweidimensionalen und/oder dreidimensionalen bildgebenden Sensoren (8-15, 86-89) erzeugten Signale auf ein Funktionieren der Vorrichtung zum Erzeugen des dreidimensionalen Bilddatensatzes auszuwerten, und/oder
- Grenzen des Arbeitsraums (6, 7, 91) sich mit einer Bewegung der Maschine (1-5, 81), wenigstens einer Person und/oder wenigstens einem beweglichen Objekt ändern.

12. Vorrichtung nach einem der Ansprüche 8 bis 11, aufweisend
- eine Vorrichtung zum drahtlosen Übertragen von von dem zweidimensionalen und/oder dreidimensionalen bildgebenden Sensor (8-15, 86-89) erzeugten Signalen zur Auswertevorrichtung (24, 90), und/oder
- eine mit der Auswertevorrichtung (24) verbundene Warnvorrichtung (29), die durch das von der Auswertevorrichtung (24) erzeugte erste Signal aktiviert wird.

13. Vorrichtung nach einem der Ansprüche 8 bis 12, wobei der Maschine (1-5, 81) ein die Bewegung der Maschine (1-5, 81) modellierendes Maschinenmodell zugeordnet ist, das die Auswertevorrichtung (24, 90) für ein Ermitteln des Soll-Zustands des Arbeitsraums (6, 7, 91) verwendet, wobei insbesondere die Vorrichtung eine Maschine (1-5, 81) und eine Steuerungsvorrichtung (26-28) zur Steuerung der Maschine (1-5, 81) aufweist und die Steuerungsvorrichtung (26-28) das Maschinenmodell für die Steuerung der Maschine (1-5, 81) verwendet.

14. Vorrichtung nach einem der Ansprüche 8 bis 13, bei der
- das Menschenmodell Gelenke und Gliedmaßen der Person (85) und/oder eine Soll-Bewegung der Person (85) nachbildet, und/oder
- das dreidimensionale Bild ein erstes Teilbild vom Arbeitsraum und ein zweites Teilbild eines vom Arbeitsraum unabhängigen Sperrbereichs aufweist und die Auswertevorrichtung eingerichtet ist, das erste Signal zu erzeugen, wenn die Analyse des dreidimensionalen Bilddatensatzes ergibt, dass die Maschine oder ein vorbestimmter Teil der Maschine oder eine Person oder ein vorbestimmter Teil der Person sich innerhalb des Sperrbereichs befindet, und/oder
- der Arbeitsraum einen ersten Teilarbeitsraum und einen zweiten Teilarbeitsraum umfasst, die Auswertevorrichtung eingerichtet ist, das erste Signal zu erzeugen, wenn der Ist-Zustand des ersten Teilarbeitsraums vom Soll-Zustand des ersten Teilarbeitsraums abweicht und die Auswertevorrichtung eingerichtet ist, ein drittes Signal zu erzeugen, wenn der Ist-Zustand des zweiten Teilarbeitsraums vom Soll-Zustand des zweiten Teilarbeitsraums abweicht.

15. Vorrichtung nach einem der Ansprüche 8 bis 14, deren Auswertevorrichtung (24, 90) eingerichtet ist, den erzeugten dreidimensionalen Bilddatensatz mittels einer vorgegebenen Bewegung der Maschine (1-5, 81) während einer Überprüfungsphase und/oder im laufenden Betrieb zu überprüfen, und/oder deren Auswertevorrichtung (24, 90) mit der Maschine (1-5, 81) verbunden ist und die Maschine (1-5, 81) mittels des von der Auswertevorrichtung (24, 90) erzeugten ersten Signals langsamer fahren lässt oder automatisch abschaltet.

## Claims

1. Method for securing a workspace comprising the following method steps:
- creating a three-dimensional image of a workspace (6, 7, 91) of a machine (1 - 5, 81) in operation,
- analysing the three-dimensional image to see whether the actual state of the workspace (6, 7, 91) differs from a desired state of the workspace (6, 7, 91),
and
- producing a first signal on the basis of the analysed three-dimensional image, if the actual state of the workspace (6, 7, 91) differs from the desired state of the workspace (6, 7, 91),
**characterised in that**
when a person (85) is situated within the workspace (91), the person is assigned a cinematised human model and a desired position of the person (85) in the desired state of the workspace (91) is taken into consideration.

2. Method according to claim 1, wherein a series of three-dimensional images of the workspace (6, 7, 91) is produced, the individual three-dimensional images are analysed to see whether the respective actual states of the workspace (6, 7, 91) differ from the corresponding desired states of the workspace (6, 7, 91), and the first signal is produced on the basis of the individual analysed three-dimensional images, if one of the actual states of the workspace (6, 7, 91) differs from the corresponding desired state of the workspace (6, 7, 91), wherein in particular the first signal is only produced if because of a predefined number of consecutive analysed three-dimensional images it is shown that the respective actual states of the workspace (6, 7, 91) differ from the corresponding desired states of the workspace (6, 7, 91).

3. Method according to claim 1 or 2, comprising producing the three-dimensional image with at least one imaging sensor (8 - 15, 86 - 89), and in particular comprising producing the three-dimensional image with a plurality of imaging sensors (8 - 15, 86 - 89) and reciprocal plausibilisation of the sensors (8 - 15, 86 - 89) on the basis of second signals produced by the sensors (8 - 15, 86 - 89).

4. Method according to any of claims 1 to 3, wherein the human model emulates the joints and limbs of the person (85) and/or a desired movement of the person (85).

5. Method according to any of claims 1 to 4, wherein the machine (1 - 5, 81) is assigned a machine model modelling the movement of the machine (1 - 5, 81), which is used for determining the desired state of the workspace (6, 7, 91), wherein the machine (1 - 5, 81) comprises a control device (26 - 28) for controlling the machine (1 - 5, 81) and the control device (26 - 28) uses the machine model for controlling the machine (1 - 5, 81).

6. Method according to any of claims 1 to 5, comprising checking a device producing the three-dimensional image by means of a predefined movement of the machine (1 - 5, 81) during a test phase, wherein in particular the test phase is repeated cyclically and/or is continuous and embedded into the normal operation of the machine (1 - 5, 81).

7. Method according to any of claims 1 to 6, wherein
- boundaries of the workspace (6, 7, 91) change on a movement of the machine (1 - 5, 81), at least of a person and/or at least one movable object and/or
- the three-dimensional image comprises a first partial image of the workspace and a second partial image of a restricted area independent of the workspace and the first signal is produced if the analysis of the three-dimensional image shows that the machine, a predefined part of the machine, a person and/or a predefined part of the person is located within the restricted area, and/or
- the workspace comprises a first part workspace and a second part workspace, the first signal is produced if the actual state of the first part workspace differs from the desired state of the first part workspace and a third signal is produced if the actual state of the second part workspace differs from the desired state of the second part workspace and/or
- the first signal is a warning signal and/or is used to automatically switch off the machine (1 - 5, 81).

8. Device for securing a workspace, comprising:
- a device (8 - 15, 86 - 89) for producing a three-dimensional image data record of a workspace (6, 7, 91) of a machine (1-5, 81) in operation and
- an evaluation device (24, 90), which is set up to analyse the three-dimensional image data record to see whether the actual state of the workspace (6, 7, 91) differs from a desired state of the workspace (6, 7, 91), and is set up to produce a first signal if the analysis of the image data record shows that the actual state of the workspace (6, 7, 91) differs from its desired state, **characterised in that** the evaluation device (24, 90) comprises an cinematised human model which models the desired position of a person (85) within the workspace (91), wherein the evaluation device (24, 90) is configured to take into consideration the actual position of a person for the actual state of the workspace (6, 7, 91) and the desired position of the person for the desired state of the workspace.

9. Device according to claim 8, the device (8 - 15, 86 - 89) of which is set up for producing a three-dimensional image data record, a series of three-dimensional image data records of the workspace (6, 7, 91), and the evaluation device (24, 90) of which is set up to analyse the individual three-dimensional image data records to see whether the respective actual states of the workspace (6, 7, 91) differ from the corresponding desired states of the workspace (6, 7, 91), and the evaluation device (24, 90) of which is set up to produce the first signal on the basis of the individual analysed three-dimensional image data records, if one of the actual states of the workspace (6, 7, 91) differs from the corresponding desired state of the workspace (6, 7, 91), wherein in particular the evaluation device (24, 90) is configured to only produce the first signal if on the basis of a predefined number of consecutive analysed three-dimensional image data records it is shown that the respective actual states of the workspace (6, 7, 91) differ from the corresponding desired states of the workspace (6, 7, 91).

10. Device according to claim 8 or 9, wherein the device for producing the three-dimensional image data record comprises a two-dimensional imaging sensor (8 - 15, 86 - 89), which pivots or rotates about an axis (A1, A2) of the two-dimensional imaging sensor (8 - 15, 86 - 89), and/or comprises a three-dimensional imaging sensor, wherein in particular the three-dimensional imaging sensor is a 3D-camera with a parabolic mirror or the three-dimensional imaging sensor is set up to rotate about an axis of the three-dimensional imaging sensor.

11. Device according to any of claims 8 to 10, wherein
- the device for producing the three-dimensional image data record comprises a plurality of two-dimensional and/or three-dimensional imaging sensors (8 - 15, 86 - 89) and the evaluation device (24, 90) is set up to evaluate signals produced by the two-dimensional and/or three-dimensional imaging sensors (8 - 15, 86 - 89) for the functioning of the device for producing the three-dimensional image data record and/or
- boundaries of the workspace (6, 7, 91) change with a movement of the machine (1 - 5, 81), of at least one person and/or at least one movable object.

12. Device according to any of claims 8 to 11, comprising
- a device for wirelessly transmitting signals produced by the two-dimensional and/or three-dimensional imaging sensor (8 - 15, 86 - 89) to the evaluation device (24, 90), and/or
- a warning device (29) connected to the evaluation device (24) and activated by the first signal produced by the evaluation device (24).

13. Device according to any of claims 8 to 12, wherein the machine (1 - 5, 81) is assigned a machine model modelling the movement of the machine (1 - 5, 81), that the evaluation device (24, 90) uses for determining the desired state of the workspace (6, 7, 91), wherein in particular the device comprises a machine (1 - 5, 81) and a control device (26 - 28) for controlling the machine (1 - 5, 81) and the control device (26 - 28) uses the machine model for controlling the machine (1 - 5, 81).

14. Device according to any of claims 8 to 13, wherein
- the human model emulates the joints and limbs of the person (85) and/or a desired movement of the person (85) and/or
- the three-dimensional image comprises a first partial image of the workspace and a second partial image of a restricted area independent of the workspace and the evaluation device is set up to produce the first signal if the analysis of the three-dimensional image data record shows that the machine or a predefined part of the machine or a person or a predefined part of the person is located within the restricted area, and/or
- the workspace comprises a first part workspace and a second part workspace, the evaluation device is set up to produce the first signal if the actual state of the first part workspace differs from the desired state of the first part workspace and the evaluation device produces a third signal if the actual state of the second part workspace differs from the desired state of the second part workspace.

15. Device according to any of claims 8 to 14, the evaluation device (24, 90) of which is set up to check the produced three-dimensional image data record by means of a predefined movement of the machine (1 - 5, 81) during a test phase and/or during operation, and/or the evaluation device (24, 90) of which is connected to the machine (1 - 5, 81) and the machine (1 - 5, 81) can be driven more slowly by means of the first signal produced by the evaluation device (24, 90) or switches off automatically.

## Revendications

1. Procédé pour sécuriser un local de travail, présentant les étapes de procédé suivantes :
- établissement d'une image tridimensionnelle d'un local de travail (6, 7, 91) d'une machine (1-5, 81) se trouvant en fonctionnement,
- analyse de l'image tridimensionnelle pour déterminer si l'état actuel du local de travail (6, 7, 91) diverge d'un état de consigne du local de travail (6, 7, 91),
et
- génération d'un premier signal sur la base de l'image tridimensionnelle analysée lorsque l'état actuel du local de travail (6, 7, 91) diverge de l'état de consigne du local de travail (6, 7, 91),
**caractérisé en ce que**
il est prévu qu'une personne (85) séjourne à l'intérieur du local de travail (91), qu'un modèle humain cinématisé soit associé à la personne (85), et qu'une position de consigne de la personne (85) soit prise en compte dans l'état de consigne du local de travail (91).

2. Procédé selon la revendication 1, dans lequel une série d'images tridimensionnelles du local de travail (6, 7, 91) est engendrée, les images tridimensionnelles individuelles sont analysées pour déterminer si les états actuels respectifs du local de travail (6, 7, 91) divergent des états de consigne correspondants du local de travail (6, 7, 91), et le premier signal est engendré sur la base des images tridimensionnelles individuelles lorsqu'un des états actuels du local de travail (6, 7, 91) diverge de l'état de consigne correspondant du local de travail (6, 7, 91), le premier signal n'étant engendré que si, sur la base d'un nombre prédéterminé d'images tridimensionnelles analysées consécutives, il résulte que les états actuels respectifs du local de travail (6, 7, 91) divergent des états de consigne du local de travail (6, 7, 91).

3. Procédé selon les revendications 1 ou 2, présentant la génération de l'image tridimensionnelle avec au moins un capteur d'imagerie (8-15, 86-89) et présentant en particulier la génération de l'image tridimensionnelle avec plusieurs capteurs d'imagerie (8-15, 86-89), et le calcul de probabilité mutuel des capteurs (8-15, 86-89) sur la base de deuxièmes signaux engendrés par les capteurs (8-15, 86-89).

4. Procédé selon l'une des revendications 1 à 3, dans lequel le modèle humain reproduit des articulations et des membres de la personne (85) et/ou un mouvement de consigne de la personne (85).

5. Procédé selon l'une des revendications 1 à 4, dans lequel un modèle de machine qui modèle le mouvement de la machine (1-5, 81) est associé à la machine (1-5, 81), lequel est utilisé pour déterminer l'état de consigne du local de travail (6, 7, 91), la machine (1-5, 81) présentant un dispositif de commande (26-28) pour commander la machine (1-5, 81) et le dispositif de commande (26-28) utilisant le modèle de machine pour la commande de la machine (1-5, 81).

6. Procédé selon l'une des revendications 1 à 5, présentant la vérification d'un dispositif engendrant l'image tridimensionnelle au moyen d'un mouvement prédéterminé de la machine (1-5, 81) pendant une phase de vérification, la phase de vérification étant en particulier répétée de manière cyclique et/ou dure constamment en étant intégrée dans le fonctionnement normal de la machine (1-5, 81).

7. Procédé selon l'une des revendications 1 à 6, dans lequel
- des limites du local de travail (6, 7, 91) changent avec un mouvement de la machine (1-5, 81), d'au moins une personne et/ou d'au moins un objet mobile, et/ou
- l'image tridimensionnelle présente une première image partielle du local de travail et une deuxième image partielle d'une zone de blocage indépendante du local de travail, et le premier signal est engendré lorsqu'il résulte de l'analyse de l'image tridimensionnelle que la machine, une partie prédéterminée de la machine, une personne et/ou une partie prédéterminée de la personne se trouve à l'intérieur de la zone de blocage, et/ou
- le local de travail comprend un premier local de travail partiel et un deuxième local de travail partiel, le premier signal est engendré lorsque l'état actuel du premier local de travail partiel diverge de l'état de consigne du premier local de travail partiel, et un troisième signal est engendré lorsque l'état actuel du deuxième local de travail partiel diverge de l'état de consigne du deuxième local de travail partiel, et/ou
- le premier signal est un signal d'alarme et/ou est utilisé pour arrêter automatiquement la machine (1-5, 81).

8. Dispositif de sécurisation d'un local de travail, présentant :
- un dispositif (8-15, 86-89) pour engendrer un jeu de données d'image tridimensionnel d'un local de travail (6, 7, 91) d'une machine (1-5, 81) et
- un dispositif d'évaluation (24, 90) qui est conçu pour analyser le jeu de données d'image tridimensionnel pour déterminer si l'état actuel du local de travail (6, 7, 91) diverge d'un état de consigne du local de travail (6, 7, 91) et qui est conçu pour engendrer un premier signal lorsqu'il résulte de l'analyse du jeu de données d'image tridimensionnelles que l'état actuel du local de travail (6, 7, 91) diverge de son état de consigne, **caractérisé en ce que** le dispositif d'évaluation (24, 90) comprend un modèle humain cinématisé qui modèle la position de consigne d'une personne (85) à l'intérieur du local de travail (91), le dispositif d'évaluation (24, 90) étant conçu de telle sorte que la position actuelle d'une personne soit prise en compte pour l'état actuel du local de travail (6, 7, 91) et la position de consigne de la personne soit prise en compte pour l'état de consigne du local de travail.

9. Dispositif selon la revendication 8, dont le dispositif (8-15, 86-89) pour engendrer un jeu de données d'image tridimensionnel est conçu pour engendrer une série de jeux de données d'image tridimensionnel, et dont le dispositif d'évaluation (24, 90) est conçu pour analyser les jeux individuels de données d'image tridimensionnel pour déterminer si les états actuels respectifs du local de travail (6, 7, 91) divergent des états de consigne correspondants du local de travail (6, 7, 91), et dont le dispositif d'évaluation (24, 90) est conçu pour engendrer le premier signal sur la base des jeux individuels de données d'image tridimensionnels analysés lorsqu'un des états actuels du local de travail (6, 7, 91) diverge de l'état de consigne correspondant du local de travail (6, 7, 91), le dispositif d'évaluation (24, 90) étant en particulier conçu pour n'engendrer le premier signal que si, sur la base d'un nombre prédéterminé d'image tridimensionnelles analysées consécutives, il résulte que les états actuels respectifs du local de travail (6, 7, 91) divergent des états de consigne correspondants du local de travail (6, 7, 91).

10. Dispositif selon les revendications 8 ou 9, dans lequel le dispositif pour engendrer le jeu de données d'image tridimensionnel présente
un capteur d'imagerie (8-15, 86-89) bidimensionnel qui est conçu à pivotement ou à rotation autour d'un axe (A1, A2) du capteur d'imagerie (8-15, 86-89) bidimensionnel, et/ou
un capteur d'imagerie tridimensionnel, le capteur d'imagerie tridimensionnel étant en particulier une caméra tridimensionnelle avec miroir parabolique ou le capteur d'imagerie tridimensionnel étant conçu rotatif autour d'un axe du capteur d'imagerie tridimensionnel.

11. Dispositif selon l'une des revendications 8 à 10, dans lequel
- le dispositif pour engendrer le jeu de données d'image tridimensionnel présente plusieurs capteurs d'imagerie (8-15, 86-89) bidimensionnels et/ou tridimensionnels et dont le dispositif d'évaluation (24, 90) est conçu pour évaluer des signaux engendrés par les capteurs d'imagerie (8-15, 86-89) bidimensionnels et/ou tridimensionnels concernant le fonctionnement du dispositif pour engendrer le jeu de données d'image tridimensionnel, et/ou
- des limites du local de travail (6, 7, 91) changent avec un mouvement de la machine (1-5, 81), d'au moins une personne et/ou d'au moins un objet mobile.

12. Dispositif selon l'une des revendications 8 à 11, présentant :
- un dispositif de transmission sans fil de signaux engendrés par les capteurs d'imagerie (8-15, 86-89) bidimensionnels et/ou tridimensionnels vers le dispositif d'évaluation (24, 90), et/ou
- un dispositif d'avertissement (29) relié au dispositif d'évaluation (24) qui est activé par le premier signal engendré par le dispositif d'évaluation (24).

13. Dispositif selon l'une des revendications 8 à 12, dans lequel un modèle de machine modelant le mouvement de la machine (1-5, 81) est associée à la machine (1-5, 81), celui-ci utilise le dispositif d'évaluation (24, 90) pour déterminer l'état de consigne du local de travail (6, 7, 91), le dispositif présentant en particulier une machine (1-5, 81) et un dispositif de commande (26-28) pour la commande de la machine (1-5, 81), et le dispositif de commande (26-28) utilisant le modèle de machine pour la commande de la machine (1-5, 81).

14. Dispositif selon l'une des revendications 8 à 13, dans lequel
- le modèle humain reproduit des articulations et des membres de la personne (85) et/ou un mouvement de consigne de la personne (85), et/ou
- l'image tridimensionnelle présente une première image partielle du local de travail et une deuxième image partielle d'une zone de blocage indépendante du local de travail, et le dispositif d'évaluation est conçu pour engendrer le premier signal lorsqu'il résulte de l'analyse de l'image tridimensionnelle que la machine ou une partie prédéterminée de la machine ou une personne ou une partie prédéterminée de la personne se trouve à l'intérieur de la zone de blocage, et/ou
- le local de travail comprend un premier local de travail partiel et un deuxième local de travail partiel, le dispositif d'évaluation est conçu pour engendrer le premier signal lorsque l'état actuel du premier local de travail partiel diverge de l'état de consigne du premier local de travail partiel, et le dispositif d'évaluation est conçu pour engendrer un troisième signal lorsque l'état actuel du deuxième local de travail partiel diverge de l'état de consigne du deuxième local de travail partiel.

15. Dispositif selon l'une des revendications 8 à 14, dont le dispositif d'évaluation (24, 90) est conçu pour vérifier le jeu de données d'image tridimensionnel au moyen d'un mouvement prédéterminé de la machine (1-5, 81) pendant une phase de vérification et/ou au cours du fonctionnement, et/ou dont le dispositif d'évaluation (24, 90) est relié à la machine (1-5, 81) et fait fonctionner plus lentement la machine (1-5, 81) ou arrête celle-ci automatiquement au moyen du premier signal engendré par le dispositif d'évaluation (24, 90).
